# EUROPEAN PATENT APPLICATION

(11) **EP 4 600 767 A1**
(43) Date of publication of application: **13.08.2025**
(21) Application number: 23885065.5
(22) Date of filing: 02.11.2023
(51) Int. Cl.: G05B 19/042

(54) **REMOTE MEASUREMENT AND CONTROL TERMINAL, AND SAFETY CONTROL SYSTEM**

(30) Priority: 04.11.2022 CN 202211379581; 04.11.2022 CN 202211378784; 04.11.2022 CN 202211379586; 04.11.2022 CN 202211379989
(71) Applicant: China Petroleum & Chemical Corporation, Beijing 100728 (CN); Sinopec Research Institute of Safety Engineering Co., Ltd., Qingdao, Shandong 266104 (CN)
(72) Inventor: CAO, Deshun, Qingdao, Shandong 266104 (CN); LI, Na, Qingdao, Shandong 266104 (CN); YANG, Zhe, Qingdao, Shandong 266104 (CN); GUO, Yian, Qingdao, Shandong 266104 (CN); GAO, Xinjiang, Qingdao, Shandong 266104 (CN); XU, Wei, Qingdao, Shandong 266104 (CN); SUN, Bing, Qingdao, Shandong 266104 (CN)
(74) Representative: Hoffmann Eitle
(86) International application number: PCT/CN2023/129419
(87) International publication number: WO 2024/094140

(57) **Abstract**

A remote measurement and control terminal and a safety control system are provided. The terminal comprises : an interface module and processing modules; each processing module comprises an I/O channel unit and a controller, and each I/O channel unit comprises an analog quantity interface unit; the analog quantity interface unit comprises a signal switching unit and a first switch unit; an input end of the first switch unit is connected to the interface module and is used for accessing a first analog signal that is externally inputted, and an output end of the first switch unit is used for sending the first analog signal to a first input end and a second input end of the controller; the signal switching unit is used for controlling the first switch unit to be disconnected when a first control signal outputted by the controller is received, for generating a second analog signal when a second control signal outputted by the controller is received, and for sending the second analog signal to the first input end and the second input end of the controller. The remote measurement and control terminal effectively improves signal transmission safety and reliability.

## Description

### Field of the Invention

The present disclosure relates to the technical field of remote measuring and controlling terminals, in particular to a remote measuring and controlling terminal and a safety control system.

### Background of the Invention

A safety instrumented system (SIS) mainly serves as an alarm and interlock part in a control system of a factory, implements an alarm action or adjustment or machine halt control over a detection result in the control system and is an important component in automatic control of a factory enterprise, which needs a series of devices for normal running and has to be provided with a sensor which can detect abnormal operation conditions such as high flow, low liquid level or wrong valve positioning. An existing SIS usually has the number of control points being 30 or above and is usually used for medium and large petrochemical apparatuses, and when the number of needed control points is small, the SIS is high in configuration cost and not suitable for a miniature chemical apparatus. Functional modules such as a processing function, an I/O function, a communication function, a safety diagnostic function and a redundant fault-tolerant function of an existing SIS product are independent cards, the independent cards are gathered in a standard cabinet, connection to a field instrument is realized through wiring of an I/O card, an architecture is mature, but a whole size is large and complicated, manufacturing cost is high, and it is merely suitable for a large flow industrial apparatus, extremely low in integration level and incapable of achieving digital-to-analogue conversion integrated design. Meanwhile, the existing SIS product is in lack of a miniature integrated I/O channel self-diagnosis loop suitable for a highly integrated system and thus cannot achieve 100% coverage over fault self-diagnosis of an I/O channel.

A remote terminal unit (RTU) is a special computer measuring and controlling unit with a modularized structure which is designed for a long communication distance and an unfavorable on-site industrial environment, is usually applied to a safety instrumented system, connects an end detection instrument and an executing mechanism with a master computer of a remote control center, has functions of remote data acquisition, control and communication and can receive an operation instruction of the master computer and control the end executing mechanism to act. The existing RTU is in lack of an integrated signal self-diagnosis circuit and thus cannot perform fault judgment on an externally inputted signal, which may result in occurrence of an error control signal and then cause a control safety accident.

### Summary of the Invention

Objectives of implementations of the present disclosure are to provide a remote measuring and controlling terminal and a safety control system, so as to solve a problem that an existing RTU cannot guarantee accurate outputting of a control signal during a general fault of an I/O channel and consequently a control safety accident is caused.

For achieving the above objectives, in a first aspect of the present disclosure, a remote measuring and controlling terminal is provided and includes: an interface module and a processing module; the processing module includes an I/O channel unit and a controller, the interface module is connected with the I/O channel unit and the controller in sequence, and the I/O channel unit includes an analog quantity interface unit;
the analog quantity interface unit includes: a signal switching unit and a first switch unit; the controller is connected with the signal switching unit and the first switch unit in sequence, an input end of the first switch unit is connected with the interface module and configured to input a first analog signal inputted externally, and an output end of the first switch unit is configured to send the first analog signal to a first input end and a second input end of the controller; and the signal switching unit is configured to control the first switch unit to switch off in the case that a first control signal outputted by the controller is received so as to cut off a connection between the first analog signal and the controller, and generate a second analog signal in the case that a second control signal outputted by the controller is received and send the second analog signal to the first input end and the second input end of the controller.

In a second aspect of the present disclosure, a safety control system is provided and includes: an executing unit; and the remote measuring and controlling terminal described above; and the remote measuring and controlling terminal is configured to generate a corresponding executing control signal according to an externally inputted signal and send the executing control signal to the executing unit so as to control the executing unit to execute a corresponding action.

The remote measuring and controlling terminal of the present disclosure is integrated with an analog quantity signal self-diagnosis circuit and can divide an externally inputted field signal or a generated self-checking signal into two signals and input the signals into two different input ends of a controller, the controller may perform fault recognition on the field signal or self-checking signal inputted into the two different input ends so as to implement fault detection on an I/O channel, full coverage over fault self-diagnosis of the I/O channel can be implemented by switching the field signal and the self-checking signal, thus it can be guaranteed that the controller outputs an accurate control signal, reliability and safety of signal transmission are effectively improved, and the control safety accident caused by a fault of a signal processing channel is avoided.

Other features and advantages of embodiments of the present disclosure will be described in detail in the following specific implementations.

### Brief Description of Drawings

Accompanying drawings are for providing further understanding of embodiments of the present disclosure, constitute a part of the specification and together with the following specific implementations, serve to explain the embodiments of the present disclosure without constituting the limitation on the embodiments of the present disclosure. In the accompanying drawings:
Fig. 1 is a schematic block diagram of a remote measuring and controlling terminal provided by Embodiment 1 of the present disclosure.
Fig. 2 is a schematic structural diagram of a remote measuring and controlling terminal provided by Embodiment 1 of the present disclosure.
Fig. 3 is a schematic structural diagram of a decision circuit provided by Embodiment 1 of the present disclosure.
Fig. 4 is a schematic structural diagram of an analog quantity interface unit provided by Embodiment 2 of the present disclosure.
Fig. 5 is a circuit diagram of an acquisition channel for an analog quantity input signal provided by Embodiment 2 of the present disclosure.
Fig. 6 is a circuit diagram of a self-checking channel for an analog quantity input signal provided by Embodiment 2 of the present disclosure.
Fig. 7 is a schematic structural diagram of a switch quantity interface unit provided by Embodiment 3 of the present disclosure.
Fig. 8 is a circuit diagram of a switch quantity output unit provided by Embodiment 3 of the present disclosure.
Fig. 9 is a circuit diagram of a sampling unit provided by Embodiment 3 of the present disclosure.
Fig. 10 is a diagram of a self-diagnosis circuit of a multipath-control switch quantity signal output channel provided by Embodiment 3 of the present disclosure.
Fig. 11 is a schematic structural diagram of a digital quantity interface unit provided by Embodiment 4 of the present disclosure.
Fig. 12 is a circuit diagram of a digital quantity interface unit provided by Embodiment 4 of the present disclosure.
Fig. 13 is a schematic structural diagram of a safety control system provided by Embodiment 7 of the present disclosure.

### Detailed Description of the Embodiments

Specific implementations of the present disclosure are described in detail below with reference to accompanying drawings. It is to be understood that the specific implementations described here are merely for describing and explaining the present disclosure instead of limiting the present disclosure.

### Embodiment 1

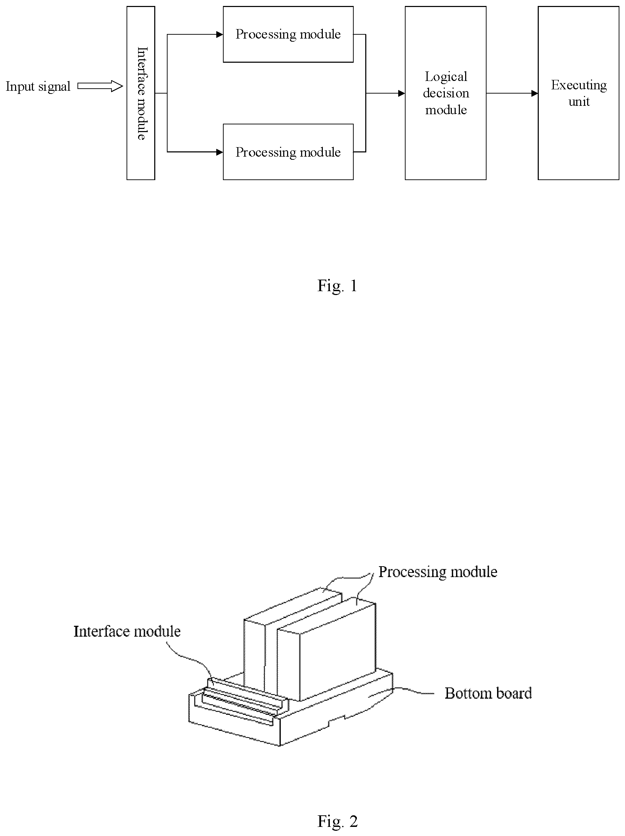

As shown in Fig. 1, a first aspect of this embodiment provides a remote measuring and controlling terminal, including: an interface module, a logical decision module and at least two processing modules. The at least two processing modules are connected with the interface module and the logical decision module. The at least two processing modules obtain an externally inputted signal respectively through the interface module, generate a corresponding control signal according to the externally inputted signal and send the generated control signal to the logical decision module. The logical decision module is configured to determine a decision result according to the control signal generated by the at least two processing modules, generate a corresponding executing control signal according to the decision result and send the executing control signal to an executing unit.

Thus, the remote measuring and controlling terminal of this embodiment has redundant signal processing channels, when any one of the signal processing channels has a fault, another signal processing channel can output an accurate control signal, so that reliability and safety of signal transmission are effectively improved, and a control safety accident caused by a fault of the signal processing channel is avoided.

The remote measuring and controlling terminal, namely an RTU, usually serves as a basic constitutional unit for controlling industrial data acquisition and monitoring control system, has characteristics of having rich communication interfaces, supporting various types of communication modes and being long in communication distance and is capable of adapting to various industrial fields under harsh environments. The number of control points of an existing safety system capable of achieving a control function is usually 30 or above, which results in a large size and complicated mounting of an existing RTU, when the number of needed control points is small, configuration cost is high, and it is not beneficial for mounting and not suitable for safety control over functions such as indoor or outdoor monitoring alarm and emergency stop of some miniature chemical apparatuses such as green hydrogen preparation, fine chemicals and waste gas treatment.

Specifically, for solving the problems in the prior art, the remote measuring and controlling terminal of this embodiment includes two completely identical processing modules which are mutually redundant, and a one-out-of-two system composed of the two processing modules and the logical decision module can effectively guarantee safety of system control. As shown in Fig. 2, the interface module, the logical decision module and the two processing modules are integrated onto a bottom board, the logical decision module is arranged inside the bottom board, the interface module is configured to perform physical or electrical isolation on an externally inputted signal inputted into the two processing modules, in this way, the present application, based on an RTU architecture, integrates a self-diagnosis loop of an I/O channel suitable for a miniature apparatus onto the processing modules and integrates the redundant processing modules, the interface module and the logical decision module onto the same circuit board, so there is no need for being externally connected with an extra independent card, and integration and miniaturization of an SIS are achieved, which is suitable for the miniature chemical apparatus and solves the problems that the existing SIS depends on the independent card, device size is huge and integration is low. The two processing modules of this embodiment constitute two redundant signal processing channels, a field externally inputted signal is inputted into the redundant processing modules through the interface module, corresponding logical calculation and processing are executed according to the externally inputted signal and then the corresponding control signal is generated, the generated control signal is sent to the logical decision module, and the logical decision module executes a 1oo2 decision according to the control signal from the two processing modules and then outputs the final executing control signal to the executing unit so as to control the executing unit to execute a corresponding action. For example, taking the externally inputted signal being a field acquired temperature signal as an example, the field acquired temperature signal is divided into two signals via the interface module and then the signals are respectively inputted into the two processing modules, the two processing modules execute a corresponding logical operation according to a preset algorithm on the basis of the received temperature signal, for example, the processing modules convert the received temperature signal to a temperature value, the obtained temperature value is compared with a preset temperature threshold, if the temperature value is higher than the temperature threshold, the processing modules output 1 to the logical decision module, and the logical decision module performs 1₀₀2 decision on two paths of received control signals and then outputs the corresponding executing control signal such as 1 to a cooling device so as to control the cooling device to perform cooling. 1 represents a high level signal, and 0 represents a low level signal.

The logical decision module is configured to: use a normal control signal in the control signals generated by the at least two processing modules as the executing control signal in the case that any one of the control signals generated by the at least two processing modules is determined as abnormal; use any one of the control signals generated by the at least two processing modules as the executing control signal in the case that the control signals generated by the at least two processing modules are determined as normal; and generate a safety control signal as the executing control signal in the case that the control signals generated by the at least two processing modules are determined as abnormal, so as to control the executing unit to stop running.

In this embodiment, the processing modules may also perform abnormality judgment on the outputted control signals, for example, by performing sampling readback on the outputted control signals, sampling values such as sampling voltage values of the outputted control signals are compared with a pre-determined standard output voltage value, so that whether the outputted control signals are abnormal is judged, for example, a range of the standard output voltage value when an output is 1 or 0 is pre-determined, when the output is 1, an output voltage is sampled and compared with the pre-determined standard output voltage value, if the sampled voltage value does not belong to the range of the pre-determined standard output voltage value, the outputted control signal is judged as abnormal, a warning signal is generated so as to warn a worker that an output channel of this path of signal is abnormal, and the logical decision module performs 1₀₀2 decision on the two paths of received control signals and then generates the final executing control signal. It may be understood that the logical decision module may be a hardware decision circuit, for example, output ends of the two processing modules are connected in series or in parallel through hard wiring and then connected into a control loop of a controlled device, so as to generate the final executing control signal. It may also be a software decision module which may be, for example, built in a controller for logical decision, the software decision module receives the control signals outputted by the two processing modules and determines fault judgment results for the control signals. For example, the software decision module determines 1 as the executing control signal in the case of receiving that the control signal outputted by one processing module is 1 and the fault judgment result is normal, and the control signal outputted by the other processing module is 0 and the fault judgment result is abnormal; and for another example, the software decision module determines 0 as the executing control signal in the case of receiving that the control signal outputted by one processing module is 1 and the fault judgment result is abnormal, and the control signal outputted by the other processing module is 0 and the fault judgment result is also abnormal, so as to control the executing unit to enter a safety running state or stop running.

A decision logic of this embodiment is shown in Table 1, if the processing module A and the processing module B are in normal output, the logical decision module actually executes a 1₀₀2 decision mode as long as a finally outputted result is the same as any result in A and B. If A can normally output, but B outputs abnormally, the system actually executes a 1oo1 decision mode, a finally outputted result is the same as the output of A, so that a system fault caused by a fault of a certain channel is avoided, and system reliability is improved. If B can output normally, but A outputs abnormally, the system actually executes the 1oo1 decision mode, and a finally outputted result is the same as the output of B. If both A and B output abnormally, the system automatically enters a fault safety state and outputs a fault safety value. In this embodiment, when the output is a non-exciting state, it is determined that the system is in a safety state, namely, when the output is a power-off state, the system is in the safety state, and for the safety control system, the apparatus is made to stop running.

**Table 1**

| Processing module A | Processing module B | Decision result |
|---|---|---|
| 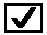 | 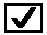 | 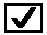 |
| | | 1oo2 |
| | | Results of both modules A and B are OK |
| 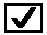 | 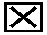 | 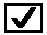 |
| | | 1oo1 |
| | | Output the result of the module A |
| 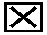 | 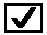 | 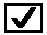 |
| | | 1oo1 |
| | | Output the result of the module B |
| 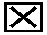 | 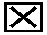 | 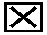 |
| | | Output the fault safety value |

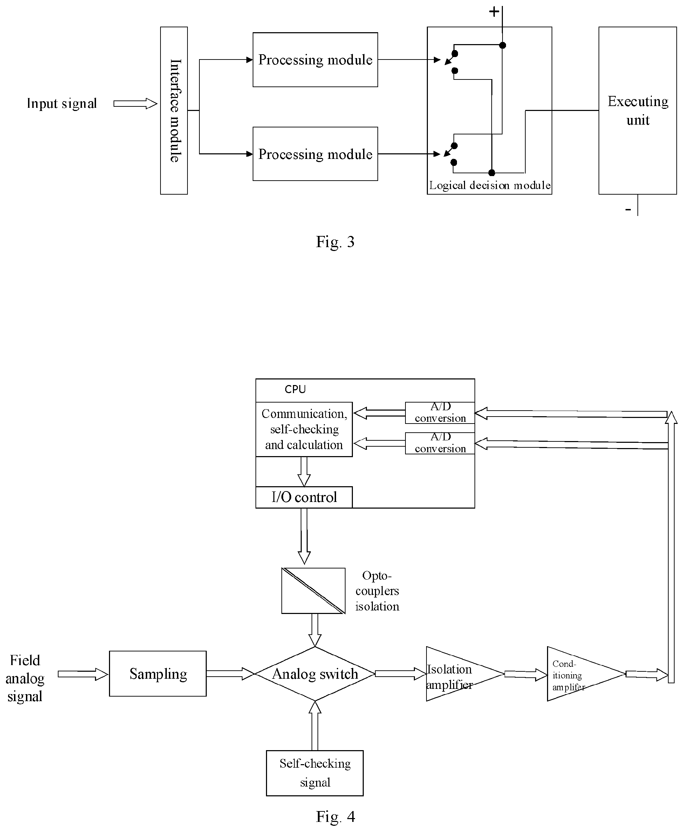

Specifically, a decision circuit of this embodiment is shown in Fig. 3, the outputs of the two processing modules are respectively used for controlling on and off of two switch elements of the decision module, the switch elements at the output ends of the two processing modules are connected in parallel through hard wiring and then connected into the control loop of the controlled device. When both the outputs of the two processing modules are 0, the decision module outputs a safety value 0, so as to control the controlled device to stop running. When both the outputs of the two processing modules are 1, the decision module outputs 1, and the controlled device is controlled to run. When the outputs of the two processing modules are 0 and 1 respectively, the decision module outputs 1, the controlled device is controlled to run, and thus the controlled device is prevented from stopping when an input of one path has a failure. For example, before sending the control signals, the processing modules perform fault detection on the control signals, for example, the processing module A generates the control signal 1, the processing module B generates the control signal 0, and the processing module A outputs 1 to the decision module when determining that its control signal is normal and outputs 0 to the decision module when determining that its control signal is abnormal; the processing module B outputs 0 to the decision module when determining that its control signal is normal and also outputs 0 to the decision module when determining that its control signal is abnormal, in this way, when both the outputs of the two processing modules are normal, decision is performed according to a normal decision logic, and when one of the outputs is abnormal, the normal control signal may be outputted accurately, fault diagnosis for the control signals per se outputted by the processing modules is achieved, accuracy of the finally determined executing control signal is effectively improved, and probability of occurrence of the safety control accident is reduced. The safety value may be set according to actual applications, for example, the safety value may also be 1 according to difference of specific safety control processes, which is not limited here. It may be understood that a structure of a hardware decision circuit may be set according to specific applications, for example, the switch elements at the output ends of the two processing modules may be connected in series through hard wiring and then connected into the control loop of the controlled device, and the structure of the decision circuit is the prior art and is not described in detail here.

In this embodiment, each processing module includes: an I/O channel unit and a controller; the interface module is connected with the I/O channel unit and the controller in sequence; and the I/O channel unit includes: an analog quantity interface unit, a switch quantity interface unit and a digital quantity interface unit.

In this embodiment, the two processing modules are completely identical and are mutually redundant, full duplex two-way communication is further performed between the two processing modules through an electrically isolated serial port, the two processing modules send a heartbeat signal and a fault self-diagnosis result to each other and thus can judge a running state of a counterpart according to the heartbeat signal and the fault self-diagnosis result, the current processing module, when judging that the counterpart processing module has a fault, generates a warning signal so as to warn the worker that the counterpart processing module has a fault, and thus when a certain processing module has a fault such as crash and cannot generate a warning signal, the other processing module generates a warning signal. A circuit board of each processing module is integrated with the same number of controllers and the same number of I/O channels, for example, one controller and 24 I/O channels are arranged in one processing module, which is not limited in this embodiment. Types of the I/O channels supported by the processing modules include DI, AI and DO. Taking a system scale being defined as a miniature system with 24 I/O points as an example, the I/O channel unit may include 10 AI interfaces, 6 DI interfaces and 8 DO interfaces, and the I/O channel unit may also be expanded according to field needs. In this embodiment, DI is rated 24VDC/10mA, DO is rated 24VDC/500mA and has voltage resistance of 60VDC, AI is superior to 0.5%, a current is 4mA to 20mA, an input impedance is 24VDC/250Ω, a voltage is 0 to 10VDC, the input impedance is no less than 100K, fastest response time from inputting to outputting signals is 50ms, and system power supply is 24VDC±10%.

The controller is a device capable of executing a control logic and other functions of an RTU. For example, the controller may execute analyzing sensor data and generating a control logic used for a control signal of an executing mechanism, and the controller may further execute a function of controlling a whole operation of the RTU, such as a function of supporting communication with an external device or system. In some embodiments, the controller may include at least one processing device for executing LINUX or other operating system. Data may be transmitted between the controller and the external device or system such as a field valve and instrument via the I/O channels on the integrated processing module, and the controller may receive data during running and diagnosis data from one or more field devices via one or more I/O channels. Meanwhile, the controller may provide data during running and historical data for other control systems such as DCS, or provide diagnosis data for the control system, and the related data may be stored in the controller or other positions. In this embodiment, the controller may be CPU, MCU or the like, which is not limited here. The system of this embodiment further has a sequence of event (SOE) recording function, the input and output signals have timestamps, which helps to find an accident cause during accident analysis, and an SOE time resolution is no greater than 1 ms.

In this embodiment, each integrated processing module is provided with a 3-position rotary switch, functions of switch positions are defined as: stop--forcing this channel to output "0", and outputting an emergency stop or warning signal; invalid output--forcing this channel to output "1" and outputting a channel bypass signal; valid output--normally outputting in this channel, namely, the input signal is acquired and processed according to a user logic to be outputted normally. A control circuit of the rotary switch is the prior art and is not described in detail here.

### Embodiment 2

Accurate running of an SIS needs a series of devices for normal running, which has to be provided with a sensor which can detect abnormal operation conditions such as high flow, low liquid level or wrong valve positioning. It needs a logical operation unit for receiving an input signal of the sensor, makes an appropriate decision according to a property of the signal and changes output thereof according to a user-defined logic so as to control the executing unit to control a device running process and make it reach a safety state. The logical operation unit, namely the processing module of the present application, may be an electrical, electronic or programmable electronic device, such as a relay, a tripping amplifier or a programmable logic controller. Signal transmission is achieved usually through an I/O card, and if a fault of a signal I/O channel cannot be recognized and processed, a great influence may be caused to safety and availability of a machine set. For example, during a signal acquisition process of analog quantity input signals such as temperature, pressure and flow, various interferences, man-made wiring errors or the like may occur to the I/O channels, which leads to inaccurate acquisition of the analog quantity signals and affects the reliability and safety of the SIS, and whether the input signals can be acquired accurately is quite important for functional safety of the whole SIS.

For solving the above problems, as shown in Fig. 4, based on Embodiment 1, an analog quantity interface unit of this embodiment includes: a signal switching unit and a first switch unit; the controller is connected with the signal switching unit and the first switch unit in sequence, an input end of the first switch unit is connected with an interface module and configured to input a first analog signal inputted externally, and an output end of the first switch unit is configured to send the first analog signal to a first input end and a second input end of the controller; the signal switching unit is configured to control the first switch unit to switch off in the case that a first control signal outputted by the controller is received, so as to cut off connection between the first analog signal and the controller, generate a second analog signal in the case that a second control signal outputted by the controller is received, and send the second analog signal to the first input end and the second input end of the controller.

Specifically, the first input end and the second input end of the controller are connected with an A/D conversion module, the analog signal inputted into the first input end and the second input end of the controller is subjected to A/D conversion via the A/D conversion module and then converted to a corresponding digital signal to be transmitted to a logical processing unit of the controller, so as to perform actions such as communication, self-checking and calculation. The first analog signal is an acquired field signal, for example, may be a sensor signal such as flow and liquid level in a safety instrumented system, or may be a current signal of 4mA to 20mA or a voltage signal of 0 to 10VDC, which is not limited here. The acquired field analog signal is further converted to a voltage signal of the maximum 5VDC via a sampling circuit and then inputted into the first switch unit. The second analog signal is a self-checking signal, and when self-checking is needed, the controller generates the self-checking signal by controlling the signal switching unit. During normal working, the first switch unit is in a switch-on state, the acquired field signal is transmitted to the two input ends of the controller through the first switch unit, the controller judges whether the analog signal received by the two input ends is abnormal, so that an accurate input signal can be selected as a target signal for next-step calculation, meanwhile, the controller may further judge whether the input ends of the controller or a field signal input channel have/has a fault according to whether the analog signal received by the two input ends is abnormal, when self-checking is needed, the controller controls the first switch unit to switch off by controlling the signal switching unit, in this case, an open circuit occurs between the field signal and the controller, the self-checking signal generated by the signal switching unit is inputted into the two input ends of the controller, and the controller judges whether the input ends of the controller or a self-checking signal input channel have/has a fault according to whether the self-checking signal received by the two input ends is abnormal.

The signal switching unit includes: a first signal switching sub-unit, a second signal switching sub-unit, a first switch sub-unit, a second switch sub-unit, a switch signal generating sub-unit and a second analog signal generating sub-unit; an input end of the first signal switching sub-unit is connected with a first output end of the controller and configured to receive the first control signal, an output end of the first signal switching sub-unit is connected with an input end of the first switch sub-unit, an output end of the first switch sub-unit is connected with the switch signal generating sub-unit and then connected with a control end of the first switch unit; and an input end of the second signal switching sub-unit is connected with a second output end of the controller and configured to receive a second control signal, an output end of the second signal switching sub-unit is connected with an input end of the second switch sub-unit, and an output end of the second switch sub-unit is connected with the second analog signal generating sub-unit and then connected with the first input end and the second input end of the controller. It may be understood that the first switch sub-unit and the second switch sub-unit may be independent switch units or may be integrated into one module; and the first output end of the controller is configured to output the first control signal, and the second output end of the controller is configured to output the second control signal.

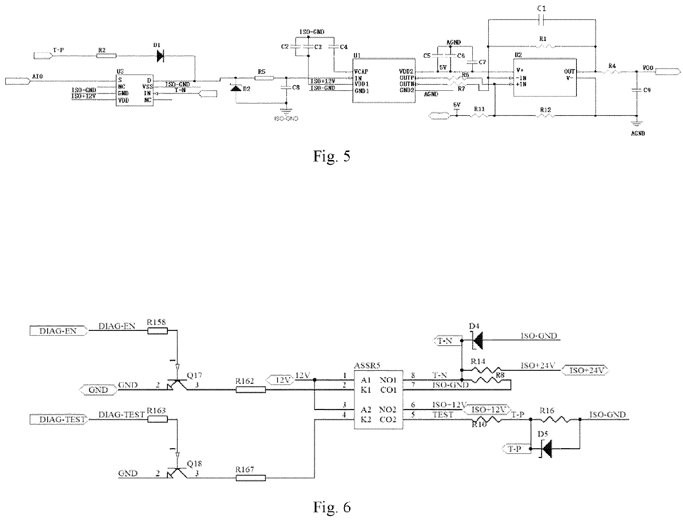

As shown in Fig. 5, in this embodiment, the analog quantity interface unit further includes: an isolation amplifier U1 and a signal conditioning amplifier U2; and an output end of the first switch unit, namely a switch module U3, is connected with an input end of the isolation amplifier U1, an output end of the isolation amplifier U1 is connected with an input end of the signal conditioning amplifier U2, and an output end of the signal conditioning amplifier U2 is connected with the first input end and the second input end of the controller. The switch module U3 is an analog switch, U1 is the isolation amplifier, and U2 is the conditioning amplifier. It may be understood that the switch module U3 further includes a related peripheral circuit composed of a divided resistor R2, a diode D1, a voltage-limiting diode D2, a filter resistor R5, a filter capacitor C8 and the like; the isolation amplifier U1 further includes filter capacitors C2, C3 and C4 of the related peripheral circuit; and the conditioning amplifier U2 further includes resistors R1, R4, R6, R7, R11 and R12, and capacitors C1, C5, C6, C7 and C9 of the related peripheral circuit. The first analog signal, namely the acquired field signal AI0, is connected with an end S of the switch module U3, and an end D of the switch module U3 is connected with an end IN of the isolation amplifier U1 via the resistor R5.

As shown in Fig. 6, in this embodiment, both the first switch sub-unit and the second switch sub-unit are opto-couplers, and the signal switching unit is further configured to perform opto-couplers isolation of the signal. Specifically, in this embodiment, the first switch sub-unit and the second switch sub-unit are integrated in one opto-coupler module to serve as two control channels of the integrated opto-coupler module. For example, in a specific example, the integrated opto-coupler module is an ASSR5, the first switch sub-unit and the second switch sub-unit are respectively two control channels in ASSR5, an end A1, an end K1, an end NO1 and an end CO1 of ASSR5 are respectively a first input end, a second input end, a first output end and a second output end of the first switch sub-unit, and an end A2, an end K2, an end NO2 and an end CO2 of ASSR5 are respectively a first input end , a second input end, a first output end and a second output end of the second switch sub-unit.

Specifically, the first signal switching sub-unit includes: a switch element. The switch element is a triode Q17. A switch signal generating sub-unit includes: a diode D4, a resistor R14 and a resistor R8. A base electrode of the triode Q17 is connected with the first output end of the controller via a resistor R158, an emitting electrode of the triode Q17 is grounded, a collector electrode of the triode Q17 is connected with the end K1 of ASSR5 via a resistor R162, and the end A1 of ASSR5 is connected with a 24V power source. The end NO1 of ASSR5 is connected with a negative electrode end of the diode D4, a first end of the resistor R14 and a first end of the resistor R8 respectively and then connected with the end IN of the switch module U3, a positive electrode end of the diode D4 is grounded, a second end of the resistor R14 is connected to a first positive voltage signal, the first positive voltage signal is a +24V voltage, and a second end of the resistor R8 is connected with the end CO1 of ASSR5. In this embodiment, the first output end of the controller is made to be DIAG-EN, and connecting points of the end NO1 of ASSR5 with the negative electrode end of the diodeD4, the first end of the resistor R14 and the first end of the resistor R8 are recorded as T-N.

The second signal switching sub-unit includes: a switch element. The switch element is a triode Q18. A second analog signal generating sub-unit includes: a diode D5, a resistor R10 and a resistor R16. A base electrode of the triode Q18 is connected with the second output end of the controller via a resistor R163, an emitting electrode of the triode Q18 is grounded, a collector electrode of the triode Q18 is connected with the end K2 of ASSR5 via a resistor R167, and the end A2 of ASSR5 is connected with a power source. The end NO2 of ASSR5 is connected to a second positive voltage signal, and the second positive voltage signal is a +12V voltage. The end CO2 of ASSR5 is connected with a first end of the resistor R10, a second end of the resistor R10 is connected with a first end of the resistor R16 and a negative electrode end of a second diode D5, then passes through the resistor R2, the diode D1 and the resistor R5, then is connected with the end IN of the isolation amplifier U1, and then is connected with the first input end and the second input end of the controller via the isolation amplifier U1 and the signal conditioning amplifier U2, and a second end of a fourth resistor R16 is connected with a positive electrode end of the diode D5 and then is grounded. In this embodiment, the second output end of the controller is made to be DIAG-TEST, and connecting points of the second end of the resistor R10 with the first end of the resistor R16 and the negative electrode end of the diode D5 are recorded as T-P.

The controller is further configured to: compare the first analog signals received by the first input end and the second input end of the controller with a preset analog quantity signal threshold respectively, and generate a first fault warning signal in the case that the first analog signal received by the first input end or the second input end of the controller is determined as abnormal according to a comparison result; and compare the second analog signals received by the first input end and the second input end of the controller with a preset analog quantity signal threshold respectively, and generate a second fault warning signal in the case that the second analog signal received by the first input end or the second input end of the controller is determined as abnormal according to a comparison result.

The controller is further configured to in the case that the first analog signal received by the first input end or the second input end of the controller is determined as normal according to a comparison result, generate a corresponding control signal according to a normal first analog signal, and send the control signal to a logical decision module; in the case that both the first analog signals received by the first input end and the second input end of the controller are determined as normal according to a comparison result, generate a corresponding control signal according to any one of normal first analog signals, and send the control signal to the logical decision module; and generate a warning signal of an outputting fault in the case that both the first analog signals received by the first input end and the second input end of the controller are determined as abnormal according to a comparison result.

It is judged that two paths of analog quantity values are valid in the case that the external field analog quantity input signals received by the first input end and the second input end of the controller fall within a preset range and a deviation between the two paths of external field analog quantity input signals received by the first input end and the second input end of the controller also falls within a preset deviation range, then the average of values of the two paths of external field analog quantity input signals received by the first input end and the second input end of the controller is computed and then serves as a target input signal, namely, an analog quantity input computed value of an analog quantity input channel; and otherwise, two paths of converted analog quantity values are recorded as invalid, and fault warning is generated. In the case that the external field analog quantity input signal received by only one path of the first input end or the second input end of the controller falls within the preset range, this path of converted analog quantity value is valid and serves as a target input signal, namely, an analog quantity input computed value of the analog quantity input channel. As the other path of converted analog quantity value does not fall within the preset range, this path of converted analog quantity value is recorded as invalid, and fault warning is generated.

In the present application, the inputted field signal is divided into two signals to be inputted into two different input ends of the controller, the controller can effectively guarantee accuracy of the field signals for calculating the control signal by performing abnormality diagnosis on the field signals inputted into the two different input ends, so that accuracy of the control signal outputted by the controller is improved; and can achieve full coverage over self-diagnosis of the I/O channels by switching the field signals and the self-checking signal. For example, if the controller judges that the field signals are normal but the self-checking signal is abnormal, it may be determined that a fault position is the signal switching unit; and if the controller judges that the self-checking signal is normal but the field signals are abnormal, it may be determined that the fault position is the interface module, the first switch unit or a field signal transmission medium. In this way, the present application actually implements two-stage diagnosis for the output signal: first-stage diagnosis implements abnormality diagnosis for the field signals/self-checking signal, so accuracy of the control signal outputted by the controller is guaranteed; and the second-stage diagnosis implements diagnosis over whether the redundant control signals per se are abnormal, so accuracy of the control signal finally outputted to the executing unit is ensured. Thus, the technical problem that the existing SIS is in lack of a miniature self-diagnosis loop and cannot achieve 100% coverage over self-diagnosis of the I/O channels is solved.

During normal running of the system without performing self-diagnosis, DIAG-EN is in a low level, the triode Q17 is off, T-N is in a high level, the end S and the end D of the analog switch U3 are connected, the external field signal AI0 is inputted into a resistance-capacitance filter circuit composed of R5 and C8 and the isolation amplifier U1 through a D-S connected end of U3, then subjected to level shift, active filter and gain conversion by the signal conditioning amplifier U2 and then converted to an analog voltage signal within a conversion range of an A/D converter inside the controller; and meanwhile, as self-checking is not performed now, DIAG-TEST is in a low level, TEST, namely the end CO2 of ASSR5 is a zero level, a voltage of a T-P self-checking signal is a zero voltage, and in this way, the external field signal AI0 cannot be affected by using a reverse blocking characteristic of the diode D1. The analog voltage signal inputted through the conditioning amplifier U2 is acquired and converted to digital quantities respectively by two paths of independent A/D converters inside the controller, then the controller compares two paths of digital quantities obtained after A/D conversion, when values of the converted digital quantities all fall within a preset range, and a deviation between the two paths of digital quantity values falls within a preset range, the input signal is used as a target analog quantity input signal finally used for user logical processing and calculation, and otherwise, warning of a large deviation of the analog quantity input signal is generated.

When the system is under normal running and self-diagnosis is needed, the first output end of the controller outputs the first control signal, at this moment, DIAG-EN is in a high level, Q17 is connected, T-N is in a low level, the end S and the end D of the analog switch U3 are cut off to form an open circuit, and the external field signal AI0 is blocked; and meanwhile, the second output end of the controller outputs the second control signal, at this moment, DIAG-TEST is in a high level, TEST is in a high level, a T-P self-checking voltage signal is generated, passes through the diode D1 which is connected in one way, is subjected to voltage dividing by the resistors R2 and R5 and resistance-capacitance filter and then is inputted into the isolation amplifier U1; the signal output from the isolation amplifier U1 is subjected to level offsetting, active filtering and gain conversing etc through signal conditioning amplifier U2 in order to obtain an analog voltage signal within the conversion range of the A/D converter inside the controller. The analog voltage signal inputted through the conditioning amplifier U2 is acquired and converted to digital quantities respectively by two paths of independent A/D converters inside the controller, then the controller compares two paths of digital quantities obtained after A/D conversion, when the deviation falls outside a preset range, warning of a large deviation of the analog quantity input signal is generated.

The controller is further configured to: continuously obtain the first analog signals or the second analog signals received by the first input end and the second input end of the controller within a preset time period, and generate a first curve representing a variation trend of the first analog signal or the second analog signal obtained by the first input end of the controller within the preset time period and a second curve representing a variation trend of the first analog signal or the second analog signal obtained by the second input end of the controller within the preset time period; and compare the first curve and the second curve with a preset analog quantity signal variation curve, and determine that the first curve or the second curve is abnormal in the case that a deviation between the first curve or the second curve and the preset analog quantity signal variation curve is greater than a curve deviation threshold.

For example, the external field analog quantity input signals or the self-checking voltage signals within 3 months are obtained continuously, and the first curve of the analog signal received by the first input end of the controller and the second curve of the analog signal received by the second input end of the controller within this time period are established respectively. The first curve and the second curve are matched with the preset analog quantity signal variation curve so as to determine the deviation between the first curve and the second curve and the preset analog quantity signal variation curve and the deviation between the analog quantity signal variation curve and the preset analog quantity signal variation curve. The preset analog quantity signal variation curve is a variation curve of analog quantity signals acquired and stored in the same time period when the system is under a normal working condition in the previous running period and serves as a normal contrast curve of this running period, where the running period may be set as 3 months. It may be understood that if a deviation between a plurality of point locations in the first curve or the second curve and the same point location on the analog quantity signal variation curve is greater than a deviation threshold, it is believed that there is a circuit fault in a corresponding analog quantity input channel. The deviation between the plurality of point locations and the same point location on the analog quantity signal variation curve being greater than the deviation threshold may be that deviations between analog quantity values at the N monitoring point locations on end and an analog quantity value at the same point location on the analog quantity signal variation curve are each greater than the deviation threshold, or that the deviations between the analog quantity values at the N monitoring point locations within a certain interval of the first curve or the second curve and the analog quantity value at the same point location on the analog quantity signal variation curve are greater than the deviation threshold, or that the deviations between the analog quantity values at the N monitoring point locations in all the monitoring point locations of the first curve or the second curve and the analog quantity value at the same point location on the analog quantity signal variation curve are greater than the deviation threshold, which is not limited in this embodiment.

### Embodiment 3

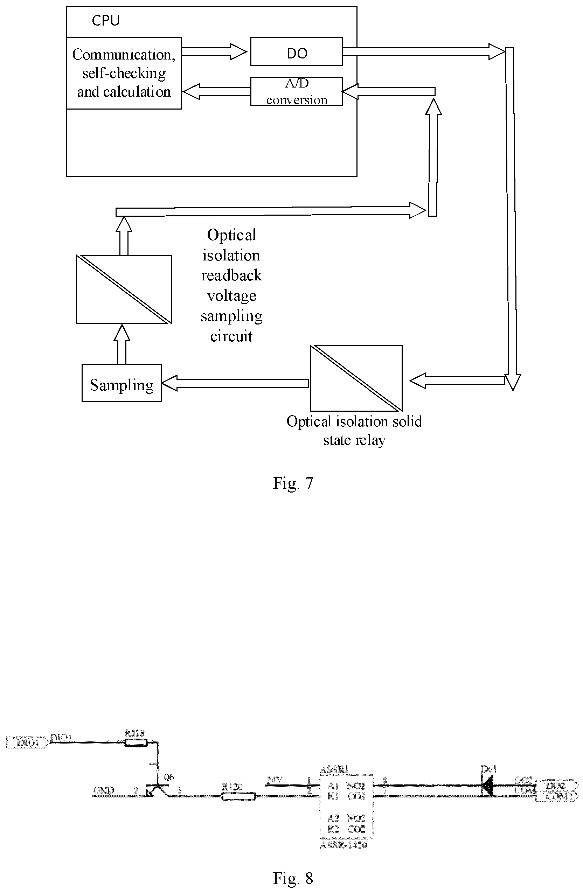

As shown in Fig. 7, based on Embodiment 1, for achieving self-diagnosis for switch quantity interfaces in I/O channels, a switch quantity interface unit includes: a switch quantity output unit and a sampling unit; an output end of a controller is connected with an input end of the switch quantity output unit, an input end of the sampling unit is connected with an output end of the switch quantity output unit, an output end of the sampling unit is connected with an input end of the controller, and the output end of the switch quantity output unit is connected with an executing unit; and the switch quantity output unit is configured to generate a third control signal corresponding to a current switch quantity signal according to the switch quantity signal sent by the controller, send the third control signal as the control signal to a logical decision module, and generate a fourth control signal corresponding to a self-checking signal according to the self-checking signal sent by the controller, and the sampling unit is configured to feed the third control signal and the fourth control signal back to the controller.

During normal working, the output end DO of the controller outputs a switch quantity signal, the switch quantity output unit generates the corresponding third control signal according to the switch quantity signal outputted by the controller so as to control a controlled device, for example, when the switch quantity signal is a high level signal, the switch quantity output unit outputs a high-level third control signal, and when the switch quantity signal is a low level signal, the switch quantity output unit outputs a low-level third control signal; the sampling unit samples the third control signal outputted by the switch quantity output unit and feeds a voltage sampling signal of the third control signal back to the controller, it may be understood that the input end of the controller is further connected with an A/D conversion module, and the voltage sampling signal inputted into the input end of the controller is subjected to A/D conversion through the A/D conversion module, then converted to a corresponding digital signal and then transmitted to a logical processing unit of the controller, so as to perform actions such as communication, self-checking and calculation. In this way, the controller can judge whether an output signal is normal by matching the voltage sampling signal with the switch quantity signal outputted by the controller, for example, the switch quantity signal outputted by the controller is a high level signal, the third control signal outputted by the switch quantity output unit is also supposed to be a high level signal, and if the sampling voltage signal fed back by the sampling unit is a low level signal, it indicates that an outputted control signal is abnormal, and then the controller sends warning information so as to warn that the outputted signal is abnormal or that a switch quantity signal output channel has a fault. Likewise, during self-checking, a self-checking signal outputted by the controller drives a fourth control signal outputted by the switch quantity output unit, and the sampling unit feeds a voltage sampling signal of the fourth control signal back to the controller; if the controller judges that the sampling voltage signal of the fourth control signal is matched with the self-checking signal, it indicates that the switch quantity signal output channel is normal; and if the controller judges that the sampling voltage signal of the fourth control signal is not matched with the self-checking signal, it is judged that the switch quantity signal output channel has a fault, and the controller sends warning information so as to warn that the switch quantity signal output channel has a fault.

As shown in Fig. 8, in this embodiment, the switch quantity output unit includes: a first switch element and an opto-couplers isolation unit; a control end of the first switch element is connected with the output end of the controller, an input end of the opto-couplers isolation unit constitutes an isolation control loop through the first switch element, and an output end of the opto-couplers isolation unit is connected with the controlled device; and the first switch element controls the isolation control loop to be connected and disconnected according to the switch quantity signal outputted by the controller, so as to control the output end of the opto-couplers isolation unit to generate the third control signal corresponding to the current switch quantity signal.

The opto-couplers isolation unit ASSR1 is a solid state relay including two channels, and the first switch element is a triode Q6. The switch quantity output unit further includes: a first resistor R118, a second resistor R120 and a first diode D61. The output end DIO1 of the controller is connected with a base electrode of the first switch element through the first resistor R118, an emitting electrode of the first switch element is grounded, and a collector electrode of the first switch element is connected with a second input end K1 of the opto-couplers isolation unit ASSR1 through the second resistor R120. The first input end A1 of the opto-couplers isolation unit ASSR1 is connected with a power source. A first output end NO1 of the opto-couplers isolation unit ASSR1 is connected with a negative electrode end of the first diode D61, a positive electrode end of the first diode D61 is connected with the controlled device, a second output end CO1 of the opto-couplers isolation unit ASSR1 is connected with the controlled device, and the first output end NO1 and the second output end CO1 of the opto-couplers isolation unit ASSR1 and the controlled device constitute a control loop of the controlled device. The first input end A1 and the second input end K1 of the opto-couplers isolation unit ASSR1 constitute a first isolation control loop through the first switch element, and the first switch element controls the first isolation control loop to be connected and disconnected according to the switch quantity signal outputted by the controller, so as to generate the third control signal corresponding to the current switch quantity signal on the control loop of the controlled device by controlling connection and disconnection between the first output end NO1 and the second output end CO1 of the opto-couplers isolation unit ASSR1. For example, the first output end NO1 and the second output end CO1 of the opto-couplers isolation unit ASSR1 and a control circuit of the controlled device constitute a loop, when the controller outputs a high-level switch quantity signal, the triode Q6 is connected, a loop of the first input end A1 and the second input end K1 of the opto-couplers isolation unit ASSR1 is connected, a light-emitting diode in the loop is lightened, so that the first output end NO1 and the second output end CO1 of the opto-couplers isolation unit ASSR1 are made to be connected, then the control circuit of the controlled device is closed, and the corresponding third control signal such as the high-level third control signal is outputted, so that control over the controlled device is implemented.

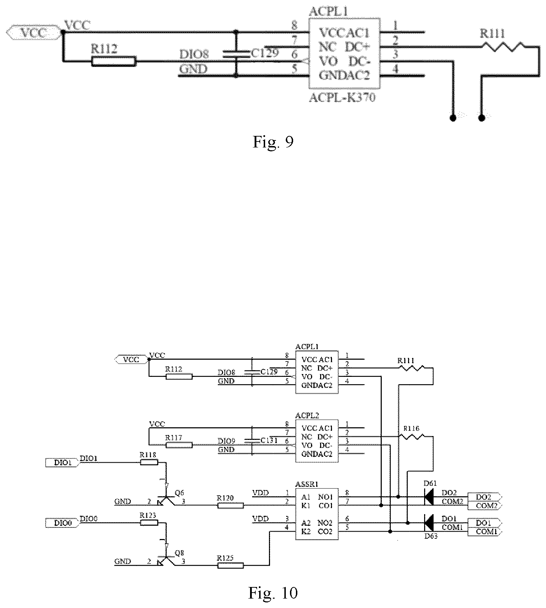

As shown in Fig. 9, the sampling unit includes: a voltage sampling unit ACPL1 and a third resistor R111. The voltage sampling unit ACPL1 adopts a direct current voltage sampling chip. An end DC+ of the voltage sampling unit ACPL1 is connected with the end NO1 of the opto-couplers isolation unit ASSR1 and the negative electrode end of the first diode D61 through the third resistor R111. An end DC- of the voltage sampling unit ACPL1 is connected with the end CO1 of the opto-couplers isolation unit ASSR1 and configured to acquire a voltage signal of the third control signal. An output end of the voltage sampling unit ACPL1 is connected with the input end of the controller and configured to feed the voltage signal of the third control signal back to the controller. Preferably, the sampling unit further includes a resistor R112 and a capacitor C129, an end VCC of the voltage sampling unit ACPL1 is connected with a first end of the resistor R112 and then connected with the input end of the controller, a second end of the resistor R112 is connected with an end VO of the voltage sampling unit ACPL1, a first end of the capacitor C129 is connected with the end VCC of the voltage sampling unit ACPL1, a second end of the capacitor C129 is connected with an end GND of the voltage sampling unit ACPL1, and the end GND of the voltage sampling unit ACPL1 is grounded. The above circuit constitutes an optical isolation readback voltage sampling circuit.

In this embodiment, the self-checking signal is a narrow pulse signal, and the controller is further configured to: generate a corresponding narrow pulse signal according to the current switch quantity signal, including: generating a narrow pulse signal which is in a low level and then in a high level in the case that the current switch quantity signal is a high level signal; and generating a narrow pulse signal which is in a high level and then in a low level in the case that the current switch quantity signal is a low level signal. Specifically, a self-checking procedure may be started in each switch quantity output cycle, a CPU outputs a microsecond-grade narrow pulse self-checking signal opposite to the normally outputted switch quantity signal, for example, if the third control signal is a high level signal, a normal output of the solid state relay ASSR1 is closing of contact, the end NO1 communicates with the end CO1, and then the outputted narrow pulse self-checking signal is a low level-high level narrow pulse signal, so that a corresponding contact of the solid state relay ASSR1 is cut off immediately and then closes; otherwise, if the normal output of the solid state relay ASSR1 is opening of contact, the narrow pulse self-checking signal makes a contact of the solid state relay ASSR1 close immediately and then be cut off, isolated through the optical isolation solid state relay ASSR1 and then outputted to the field, the CPU reads back a voltage waveform of an output contact state of the solid state relay ASSR1 through the optical isolation readback voltage sampling unit and compares the voltage waveform with a waveform of the outputted narrow pulse self-checking signal, and if not consistent, warning is performed. As the outputted narrow pulse self-checking signal is in a microsecond grade, state change of a switch quantity output contact does not cause action of a field executing mechanism, which may achieve self-diagnosis in 100% coverage of the switch quantity signal output channel.

As shown in Fig. 10, a self-diagnosis circuit of the switch quantity signal output channel of this embodiment may be further extended to control multiple paths of controlled devices, for example, the circuit further includes: a voltage sampling unit ACPL2, a diode D63, a capacitor C131, a resistor R117, a resistor R116, a resistor R123, a resistor R125 and a triode Q8.

An end VCC of the voltage sampling unit ACPL2 is connected with a first end of the fifth resistor R117 and then connected with the input end of the controller, a second end of the resistor R117 is connected with an end VO of the voltage sampling unit ACPL2, a first end of the capacitor C131 is connected with the end VCC of the voltage sampling unit ACPL2, a second end of the capacitor C131 is connected with an end GND of the voltage sampling unit ACPL2, and the end GND of the voltage sampling unit ACPL2 is grounded. An end DC+ of the voltage sampling unit ACPL2 is connected with the end NO2 of the opto-couplers isolation unit ASSR1 and a negative electrode end of the diode D63 through the resistor R116, an end DC- of the voltage sampling unit ACPL2 is connected with the end CO2 of the opto-couplers isolation unit ASSR1, the end NO2 of the opto-couplers isolation unit ASSR1 is connected with the negative electrode end of the diode D63, and a positive electrode end of the diode D63 and the end CO2 of the opto-couplers isolation unit ASSR1 are connected with the control circuit of the second path of controlled device to constitute a control loop of the controlled device.

The output end DIO0 of the controller is connected with a base electrode of the triode Q8 through the resistor R123, an emitting electrode of the triode Q8 is grounded, a collector electrode of the triode Q8 is connected with a fourth input end K2 of the opto-couplers isolation unit ASSR1 through the resistor R12, and the third input end A2 of the opto-couplers isolation unit ASSR1 is connected with the power source.

In this embodiment, the controller is further configured to: match the current switch quantity signal with the third control signal, and generate a first fault warning signal in the case that the current switch quantity signal is not matched with the third control signal; and match the self-checking signal with the fourth control signal, and generate a second fault warning signal in the case that the self-checking signal is not matched with the fourth control signal. For example, if the switch quantity signal outputted by the controller is a high level signal, and a voltage signal of the sampled third control signal shows a low level signal, it indicates that the output is abnormal, at the moment, it is judged that the switch quantity signal output channel possibly has a fault, the first fault warning signal is generated, and the logical decision module executes decision on switch quantity signals outputted by a processing module A and a processing module B according to a pre-determined decision logic and generates an executing control signal. Likewise, during self-checking, if the self-checking signal outputted by the controller is a high level-low level signal, and a voltage signal of the sampled fourth control signal is not a high level-low level signal, it indicates that the output is abnormal, and at the moment, it is judged that the switch quantity signal output channel possibly has a fault, and the second fault warning signal is generated. It may be understood that the controller may generate a self-checking signal once in each switch quantity cycle so as to execute self-checking of the switch quantity signal output channel once.

The method in this embodiment is described below through specific examples.

During normal running without performing self-diagnosis, when DIO1 is in a high level, the Q6 is connected, the output contacts NO1 and CO1 of the first optical isolation solid state relay of ASSR1 close, which causes voltage variation on the R111; and the CPU reads back a voltage variation signal of the R111 through the optical isolation voltage acquisition chip ACPL1 and then compares with a high level and a low level of a DIO1 outputted signal, and if not consistent, warning is performed.

During normal running without performing self-diagnosis, when DIO1 is in a low level, the Q6 is disconnected, the output contacts NO1 and CO1 of the first optical isolation solid state relay of ASSR1 are cut off, which causes voltage variation on the R111; and the CPU reads back a voltage variation signal of the R111 through the optical isolation voltage acquisition chip ACPL1 and then compares with a high level and a low level of a DIO1 outputted signal, and if not consistent, warning is performed.

During normal running with the need for performing self-diagnosis, when the current switch quantity signal is in a high level, namely, DIO1 is in a high level, the output contacts NO1 and CO1 of the first optical isolation solid state relay of ASSR1 close, at the moment, the CPU makes the DIO1 generate a microsecond-grade low-level narrow pulse self-checking signal, the contacts NO1 and CO1 are cut off immediately, which causes voltage variation on the R111, the CPU reads back a voltage variation signal of the R111 through the optical isolation voltage acquisition chip ACPL1 and then compares with a high level and a low level of a self-checking signal outputted by the DIO1, and if not consistent, warning is performed.

During normal running with the need for performing self-diagnosis, when the DIO1 is in a low level, the output contacts NO1 and CO1 of the first optical isolation solid state relay of ASSR1 are cut off, at the moment, the CPU makes the DIO1 generate a microsecond-grade high-level narrow pulse self-checking signal, the contacts NO1 and CO1 close immediately, at the moment, voltage variation is caused on the R111, the CPU reads back a voltage variation signal of the R111 through the optical isolation voltage acquisition chip ACPL1 and then compares with a high level and a low level of the self-checking signal outputted by the DIO1, and if not consistent, warning is performed.

The controller is further configured to: continuously obtain the third control signal or the fourth control signal within the preset time period through the sampling unit and generate a first curve representing a voltage variation trend of the third control signal or generate a second curve representing a voltage variation trend of the fourth control signal; and compare the first curve or the second curve with a preset voltage variation curve, and determine that the first curve or the second curve is abnormal in the case that a deviation between the first curve or the second curve and the preset voltage variation curve is greater than a curve deviation threshold. The preset voltage variation curve may be a trend curve obtained according to variation conditions of a theoretical voltage of a switch quantity output signal in at least one switch quantity output cycle over time, or the preset voltage variation curve may be a trend curve obtained according to variation conditions of a theoretical voltage of a self-checking signal in at least one switch quantity output cycle over time, and it may be understood that output of a switch quantity is fixed in each switch quantity output cycle.

Taking monitoring the switch quantity signal as an example, sampling voltage signals of switch quantity output signals in N switch quantity output cycles are obtained continuously to obtain the first curve, the first curve is compared with the preset voltage variation curve, and if deviations between a plurality of sampling points in the first curve and the same point location on the preset voltage variation curve are greater than a voltage deviation threshold, it is believed that the switch quantity output channel has a fault. The deviations between the plurality of sampling points and the same point location on the preset voltage variation curve being greater than the voltage deviation threshold may be that deviations between voltage values at the N sampling point locations on end and a voltage value at the same point location on the preset voltage variation curve are each greater than the voltage deviation threshold, or that deviations between voltage values at the N sampling point locations in a certain interval of the first curve and the voltage value at the same point location on the preset voltage variation curve are greater than the voltage deviation threshold, or that deviations between voltage values in the N sampling point locations in all the sampling point locations of the first curve and the voltage value at the same point location on the preset voltage variation curve are greater than the voltage deviation threshold, which is not limited in this embodiment. It may be understood that this embodiment may further judge whether the output channel has a fault by continuously monitoring the self-checking signal. By acquiring a narrow pulse waveform signal of the self-checking signal within a period of time and continuously comparing a trend variation of the pulse waveform within a period of time, a degradation property of a circuit device may be monitored continuously, and prediction of a circuit fault is achieved.

### Embodiment 4

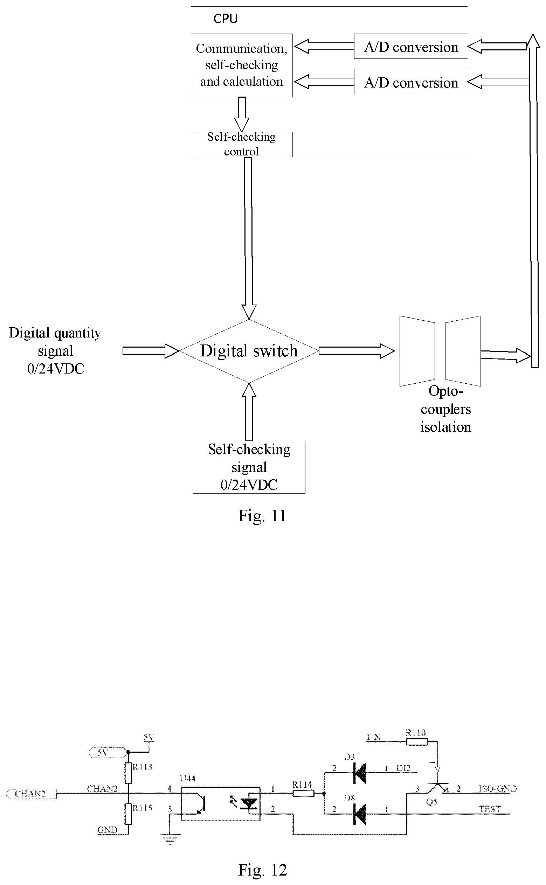

A shown in Fig. 11, based on Embodiment 1, for implementing self-diagnosis for digital quantity interfaces in I/O channels, a digital quantity interface unit includes: a second switch unit, a first signal isolation unit and an output judgment unit. The second switch unit is connected to an input end loop of the first signal isolation unit in series, a controller is connected with the second switch unit and the input end loop of the first signal isolation unit, the output judgment unit is connected to an output end loop of the first signal isolation unit, and the output end loop of the first signal isolation unit is connected with a first input end and a second input end of the controller. The input end loop of the first signal isolation unit is further configured to input an externally inputted digital quantity input signal. The controller is configured to send a self-checking signal to the input end loop of the first signal isolation unit and send a switch control signal to the second switch unit so as to control the second switch unit to switch on or off, and the input end loop of the first signal isolation unit is connected in the case that the second switch unit is switched on and disconnected in the case that the second switch unit is switched off. The output judgment unit is configured to output a high-level judgment signal through the output end loop of the first signal isolation unit in the case that the input end loop of the first signal isolation unit is disconnected, and the output end loop of the first signal isolation unit outputs a low-level judgment signal in the case that the input end loop of the first signal isolation unit is connected and the digital quantity input signal or the self-checking signal is a high level signal.

In this embodiment, the at least two input ends of the controller are preferably the first input end and the second input end of the controller. The first input end and the second input end of the controller are connected with an A/D conversion module, and the analog signal inputted into the first input end and the second input end of the controller is subjected to A/D conversion via the A/D conversion module and then converted to a corresponding digital signal to be transmitted to a logical processing unit of the controller, so as to perform actions such as communication, self-checking and calculation. The controller controls the second switch unit to switch on by sending the control signal to the second switch unit, at the moment, the input end loop of the first signal isolation unit is in an on-state, and the first signal isolation unit may be an opto-coupler. A 0/24VDC actual digital quantity signal from the field is inputted into the input end loop of the first signal isolation unit, the output end loop of the first signal isolation unit outputs a corresponding judgment signal according to a field digital quantity signal, for example, when the field digital quantity signal is a 24VDC signal, the input end loop of the first signal isolation unit is powered on, its inside light-emitting diode is lightened, the output end loop of the first signal isolation unit is controlled to be connected, and at the moment, the output end loop of the first signal isolation unit outputs a low-level judgment signal. If the field digital quantity signal is a 0VDC signal, the light-emitting diode inside the first signal isolation unit is not lightened, the output end loop of the first signal isolation unit is disconnected, at the moment, the output end loop of the first signal isolation unit outputs a high-level judgment signal under an action of the output judgment unit, and thus the digital quantity input signal is converted to a standard analog voltage signal within an A/D conversion range. The judgment signal outputted by the output end loop of the first signal isolation unit is respectively transmitted to the first input end and the second input end of the controller and then simultaneously acquired and converted to digital quantities by the two paths of A/D converters; and the controller obtains the judgment signal finally used for logical processing and calculation by comparing the two paths of converted digital quantities with a preset value and performing result comparison through two times of calculation, when a deviation falls within a preset range, this signal is used as an input signal finally used for user logical processing and calculation, and otherwise, warning is performed due to a large deviation of the input signal. When self-checking is needed, the controller outputs an I/O control signal through a self-checking control program, and controls, after opto-couplers isolation, the second switch unit to switch on, the self-checking signal is inputted to the first signal isolation unit, an actual field signal is converted to a self-checking voltage signal, so a detection signal is injected into a digital quantity input channel, and the controller judges whether the input channel of the digital quantity input signal has a fault according to whether the self-checking signals received by the two input ends are abnormal, and thus 100% self-diagnosis for a fault of an acquisition channel for the digital quantity input signal is achieved. The self-checking signal may also be a self-checking signal of 0/24VDC.

As shown in Fig. 12, in this embodiment, the second switch unit includes: a second switch element and a fourth resistor R110; and a first output end of the controller is connected with a control end of the second switch element through the fourth resistor R110, and the controller sends a switch control signal through the first output end of the controller. The first signal isolation unit includes: an opto-coupler unit U44; a first input end of the opto-coupler unit U44 is connected with a second output end of the controller and connected with a digital quantity input signal, a second input end of the opto-coupler unit U44 is grounded through the second switch element, and the controller sends the self-checking signal through the second output end of the controller; and a first output end of the opto-coupler unit U44 is connected with the at least two input ends of the controller and the output judgment unit, and a second output end is grounded.

The second switch element is a triode Q5, and the opto-coupler unit U44 adopts an opto-coupler device with a model number of FOD817. The first output end of the controller is connected with a base electrode of the triode Q5 through the fourth resistor R110, an emitting electrode of the triode Q5 is grounded, a collector electrode of the triode Q5 is connected with a negative electrode end of the opto-coupler unit U44, and a positive electrode end of the opto-coupler unit U44 is connected with the second output end of the controller and connected with a field inputted digital quantity signal. A collector electrode end of the opto-coupler unit U44 is connected with the first input end and the second input end of the controller, an emitting electrode is grounded, and the output judgment unit is connected to the collector electrode of the opto-coupler unit U44. A switch control signal T-N outputted by the first output end of the controller is connected to the base electrode of the triode Q5 via the fourth resistor R110, so as to control the collector electrode and the emitting electrode of the triode Q5 to be connected, and the input end loop of the opto-coupler unit U44 is in an on-state.

Optionally, the digital quantity interface unit further includes: a second signal isolation module and a fifth resistor R114; the second signal isolation module is connected with the first input end of the opto-coupler unit U44 through the fifth resistor R114; the second output end of the controller is connected with the fifth resistor R114 through the second signal isolation module, and the digital quantity input signal is transmitted to the first input end of the opto-coupler unit U44 through the second signal isolation module; and the second signal isolation module is configured to isolate the digital quantity input signal and the self-checking signal.

Specifically, the second signal isolation module includes: a second diode D3 and a third diode D4; a negative electrode end of the second diode D3 is connected with the positive electrode end of the opto-coupler unit U44 through the fifth resistor R114, and a positive electrode end of the second diode D3 is connected with the field digital quantity input signal; and a negative electrode end of the third diode D4 is connected with the positive electrode end of the opto-coupler unit U44 through the fifth resistor R114, a positive electrode end of the third diode D4 is connected with the second output end of the controller and configured to receive the self-checking signal TEST outputted by the controller, and the field digital quantity input signal and the self-checking signal can be effectively prevented from interfering with each other under an action of the second diode D3 and the third diode D4. It may be understood that the field digital quantity input signal is connected with the emitting electrode of the triode Q5 through a transmission interface, the transmission interface may be an interface of any digital quantity input signal, which is not limited here, and as shown in Fig. 10, the field digital quantity input signal is recorded as DI2.

Optionally, the output judgment unit includes: a sixth resistor R113 and a seventh resistor R115; a first end of the sixth resistor R113 is connected with a 5V stable-voltage power source, and a second end of the sixth resistor R113 is connected with a first end of the seventh resistor R115 and the collector electrode end of the opto-coupler unit U44 and then connected with the first input end and the second input end of the controller; and a second end of the seventh resistor R115 is grounded.

The sixth resistor R113 and the seventh resistor R115 are connected in parallel and then connected with the collector electrode end of the opto-coupler unit U44, an analog quantity voltage signal CHAN2 (namely a judgment signal) finally used for user logical processing and calculation is outputted to the first input end and the second input end of the controller, and the acquired analog quantity voltage signal CHAN2 is used for diagnosis and fault prediction inside the controller through A/D conversion.

In this embodiment, the digital quantity interface unit further includes: a third signal isolation module. The third signal isolation module is an opto-coupler. The first output end of the controller is connected with the fourth resistor R110 through the third signal isolation module.

A working principle of this embodiment is as follows:
During normal system running without performing self-diagnosis, as self-diagnosis is not needed, the TEST signal is in a low level, namely, no self-checking signal is inputted into the controller, the control signal T-N is in a high level, and the triode Q5 is connected now. If the external digital quantity input signal DI2 is inputted in a 24V high level now, the DI2 makes the second diode D3 and the fifth resistor R114 be connected to control the input end of the opto-coupler U44, the light-emitting diode inside the input end of the opto-coupler U44 is switched on to emit light, the output end of the opto-coupler U44 receives a light-emitting signal of the input end to be switched on and grounded, and the outputted analog voltage signal CHAN2 sent to the controller is in a low level of 0V; and if the external digital quantity input signal DI2 is inputted in a 0V low level now, the second diode D3 and the fifth resistor R114 are in a cut-off state, the input end of the opto-coupler U44 is cut off and does not emit light, the output end of the opto-coupler U44 does not receive the light-emitting signal of the input end and thus is also cut off, and the outputted analog voltage signal CHAN2 sent to the controller is in a high level under actions of a pull-up resistor R113 and the 5V power source and is shown as 5V.

During normal system running with the need for performing self-diagnosis, if the TEST signal is in a high level, the control signal T-N is in a high level, and the triode Q5 is connected now. At the moment, it is in an unsafe state, if the external digital quantity input signal DI2 is not electrified and is in a low level of 0V, the TEST signal makes the second diode D3 and the fifth resistor R114 be connected to control the input end of the opto-coupler U44, the input end of the opto-coupler U44 is switched on to emit light, the output end of the opto-coupler U44 receives the light-emitting signal of the input end to be switched on and grounded, and the outputted analog voltage signal CHAN2 sent to the controller is in a low level of 0V.

During normal system running with the need for performing self-diagnosis, if the TEST signal is in a low level, the control signal T-N is in a high level, and the triode Q5 is connected now. At the moment, it is in an unsafe state , if the external digital quantity input signal DI2 is not electrified, namely, DI2 is in a low level of 0V, the second diode D3 and the fifth resistor R114 are in a cut-off state, the input end of the opto-coupler U44 is cut off and does not emit light, the output end of the opto-coupler U44 does not receive the light-emitting signal of the input end and thus is also cut off, and the outputted analog voltage signal CHAN2 sent to the CPU is in a high level under actions of the pull-up resistor R113 and the 5V power source and is shown as 5V.

During normal system running with the need for performing self-diagnosis, if the TEST signal is in a high level, the control signal T-N is in a high level, and the triode Q5 is connected now. At the moment, it is in a safe state, if the external digital quantity input signal DI2 is electrified, namely the DI2 is inputted in a 24V high level, the DI2 makes the second diode D3 and the fifth resistor R114 be connected to control the input end of the opto-coupler U44, the input end of the opto-coupler U44 is switched on to emit light, the output end of the opto-coupler U44 receives the light-emitting signal of the input end to be switched on and grounded, and the outputted analog voltage signal CHAN2 sent to the controller is in a low level of 0V.

During normal running with the need for performing self-diagnosis, if the TEST signal is in a low level, the control signal T-N is in a high level, and the triode Q5 is connected now. At the moment, it is in a safe state, if the external digital quantity input signal DI2 is electrified and is inputted in a 24V high level, the DI2 makes the second diode D3 and the fifth resistor R114 be connected to control the input end of the opto-coupler U44, the input end of the opto-coupler U44 is switched on to emit light, the output end of the opto-coupler U44 receives the light-emitting signal of the input end to be switched on and grounded, and the outputted analog voltage signal CHAN2 sent to the CPU is in a low level of 0V.

During normal system running with the need for performing self-diagnosis, if the control signal T-N is in a low level, the triode Q5 is cut off now. Then whether TEST signal is in a high level and a low level, the input end of the opto-coupler U44 is cut off in an open circuit and does not emit light, the output end of the opto-coupler U44 does not receive the light-emitting signal of the input end and thus is also cut off, and the outputted analog voltage signal CHAN2 sent to the controller is in a high level under actions of the pull-up resistor R113 and the 5V power source and is shown as 5V.

Meanwhile, the outputted analog voltage signal CHAN2 corresponding to the external field digital quantity input signal may further be continuously acquired to the A/D converter inside the controller, for example, through 3-month running, drifting and degradation trends of the opto-coupler U44, the sixth resistor R113 and the seventh resistor R115 are continuously monitored so that fault prediction may be performed. It may be understood that as resistance values of the sixth resistor R113 and the seventh resistor R115 are known, voltage values of the sixth resistor R113 and the seventh resistor R115 may be calculated by acquiring a voltage value of the outputted analog voltage signal CHAN2, and the calculation process is the prior art and is not limited here.

In this embodiment, the input end loop of the first signal isolation unit receives the externally inputted digital quantity input signal, and a first judgment signal corresponding to the digital quantity input signal is outputted to the first input end and the second input end of the controller through the output end loop of the first signal isolation unit. The controller is further configured to: perform analog-digital conversion on the first judgment signal received by the first input end and the second input end of the controller and then compare the converted first judgment signals with a digital quantity signal threshold respectively, and generate a first fault warning signal in the case that the first judgment signal received by any one input end of the controller is determined as abnormal according to a comparison result; and send the self-checking signal to the input end loop of the first signal isolation unit during self-checking, output a second judgment signal corresponding to the self-checking signal to the first input end and the second input end of the controller through the output end loop of the first signal isolation unit, perform analog-digital conversion on the second judgment signal received by the first input end and the second input end of the controller and then compare the converted second judgment signals with a digital quantity signal threshold respectively, and generate a second fault warning signal in the case that the second judgment signal received by any one input end of the controller is determined as abnormal according to a comparison result.

Specifically, the 0/24VDC digital quantity signal from the field is subjected to opto-couplers isolation to be converted to a standard analog voltage signal within an A/D conversion range and then simultaneously acquired and converted to digital quantities through two paths of A/D converters of the controller. The controller obtains the judgment signal finally used for logical processing and calculation by comparing the two paths of converted digital quantities with the preset digital quantity signal threshold and performing result comparison through two times of calculation. When a deviation falls within a preset range, this signal is used as the analog quantity input signal finally used for user logical processing and calculation, and otherwise, warning is performed due to a large deviation of the analog quantity input signal.

The first judgment signal received by the corresponding input end of the controller is determined as abnormal in the case that a deviation between the first judgment signal received by any one input end of the controller and the digital quantity signal threshold is greater than a preset deviation range; and the second judgment signal received by the corresponding input end of the controller is determined as abnormal in the case that a deviation between the second judgment signal received by any one input end of the controller and the digital quantity signal threshold is greater than a preset deviation range. For example, if a deviation between a digital quantity of a certain path of judgment signal which is subjected to A/D conversion in the first input end and the second input end of the controller and the preset digital quantity signal threshold is greater than the preset deviation range, this path of inputted judgment signal may be determined as abnormal, this path of input value is invalid and cannot be used as a target value of the controller for logical calculation, and the controller generates fault warning.

In this embodiment, the controller is further configured to: continuously obtain a judgment signal received by any one input end of the controller within a preset time period, and generate a first curve representing a voltage variation trend of the judgment signal obtained by the corresponding input end of the controller within the preset time period; and determine the first curve as abnormal in the case that a deviation between the first curve and the standard voltage variation curve is greater than a curve deviation threshold.

Specifically, the judgment signal in a period of time such as 3 months is obtained continuously, and a first curve of voltage values received by the first input end of the controller and a first curve of voltage values received by the second input end of the controller in this period of time are established through the voltage values corresponding to the judgment signal obtained by the two input ends of the controller. The first curve corresponding to the first input end of the controller and the first curve corresponding to the second input end of the controller are matched with the preset standard voltage variation curve respectively, and a deviation between each first curve and the standard voltage variation curve is determined, where the standard voltage variation curve is a voltage variation curve of the judgment signal in an ideal state. It may be understood that if a deviation between a plurality of point locations in the first curve and the same point location on the standard voltage variation curve is greater than a deviation threshold, it is believed that there is a circuit fault in the corresponding digital quantity input channel. The deviation between the plurality of point locations and the same point location on the standard voltage variation curve being greater than the deviation threshold may be that deviations between voltage values at the N monitoring point locations on end and a voltage value at the same point location on the standard voltage variation curve are each greater than the deviation threshold, or that deviations between voltage values at the N monitoring point locations in a certain interval of the first curve and the voltage value at the same point location on the standard voltage variation curve are greater than the deviation threshold, or that deviations between the voltage values at the N monitoring point locations in all the monitoring point locations of the first curve and the voltage value at the same point location on the standard voltage variation curve are greater than the deviation threshold, which is not limited in this embodiment.

The controller is further configured to in the case that both the first judgment signals received by all the input ends of the controller are determined as normal according to a comparison result, generate a corresponding control signal according to a normal first judgment signal in the case that the first judgment signal received by the first input end or the second input end of the controller is determined as normal according to a comparison result; generate a corresponding control signal according to any one of normal first judgment signals; and in the case that both the first judgment signals received by all the input ends of the controller are determined as abnormal according to a comparison result, generate a warning signal of an outputting fault, and send the warning signal to the logical decision module. The logical decision module executes decision according to the control signals or warning signals generated by a processing module A and a processing module B and generates an executing control signal.

### Embodiment 5

Based on Embodiment 1, for performing fault monitoring for all DI, AI and DO channels, an I/O channel unit of this embodiment includes the analog quantity interface unit of Embodiment 2, the switch quantity interface unit of Embodiment 3 and the digital quantity interface unit of Embodiment 4.

### Embodiment 6

Based on Embodiment 1, an RTU in the present application adopts a heterogeneous redundant channel design, for example, in the redundant processing module A and processing module B, a related peripheral circuit and a controller may adopt a device having the same function but different specifications and model numbers to establish a heterogeneous redundant channel, so as to reduce a common cause failure rate and improve reliability of a redundant system.

The present application adopts an FMEA model for calculating a common cause failure rate of the redundant channel. Specifically, first, a total contribution of each measure is divided into two categories of X and Y according to a diagnosis test, and a ratio of X:Y of each measure represents a degree to which the diagnosis measure can improve an effect of resistance to common cause failure of this measure. X represents that resistance to the common cause failure can be improved through the diagnosis test; and Y represents that the effect on overcoming the common cause failure cannot be improved through the diagnosis test. Then S=X+Y; S_{D}= X(Z+1)+Y; where values of X and Y may be determined depending on a preset standard according to a test result, and a value of Z may be determined according to a frequency and a coverage ratio of the diagnosis test. After values of X and Y under each test are determined, a sum value of X and a sum value of Y are calculated respectively, and coefficient scores of β and β_{D} are determined by looking up in the table according to the sum value of X and the sum value of Y depending on the preset standard such as IEC61508-6, and thus a common cause failure value is calculated. B represents a coefficient of a non-detected fault, and β_{D} represents a coefficient of a detected fault.

Statistics of a contribution of a diagnosis test for an electronic element of the present application is shown in the following table:

| **Item** | **Logical sub-system** | | **Logical sub-system** | Description on how to meet conditions in a system |
|---|---|---|---|---|
| | **X** | **Y** | | |
| **Separate/space apart** | **7.0** | **3.0** | | |
| Whether wiring of all signal cables in each channel in all positions is spaced apart? | 1.5 | 1.5 | √ | Only diagnosis information is exchanged between two channels |
| Whether printed circuit boards of all channels of the logical sub-system are independent? | 3.0 | 1.0 | √ | IOs are in different racks, and a printed circuit of a CPU bottom board is completely independent |
| Whether channels of the logical sub-system are in own frameworks? | 2.5 | 0.5 | √ | The system adopts an independent machine case, and the machine case has an electromagnetic shielding function |
| **Diversity and redundancy** | **17.0** | **2.0** | | |
| Whether each channel adopts different electronic technologies? For example, an electronic circuit, programmable electronics and another relay are used. | 8.0 | | √ | Electronic devices are distinguished, especially, devices such as a chip resistor, a Schottky rectifier and a transient voltage suppressor used in an analog quantity and switch quantity self-checking loop, wherein the analog quantity and switch quantity are generated by a multitrack power source on a board |
| Whether each channel adopts different electronic technologies? For example, an electronic circuit or another programmable electronics are used. | 6.0 | | √ | Ibid |
| Whether to use a medium diversity method? For example, a hardware diagnosis test is performed by using different technologies. | 3.0 | 2.0 | √ | |
| **Complexity/design/application/aging/experience** | **2.0** | **1.0** | | |
| Whether a cross connection between channels can exclude the exchange of any information, unless otherwise being used for a diagnosis test or a decision purpose? | 0.5 | 0.5 | √ | |
| Whether an input and an output have overvoltage and overcurrent protection in a possible level | 1.5 | 0.5 | √ | Adopt self-recovered safety, an operational amplifier and a photoelectric coupler for protection |
| **Regulation/manual interface** | **1.5** | **1.5** | | |
| Whether documented maintenance regulations regulate that all parts (such as cables) in the redundant system are mutually independent without the need for re-positioning? | 0.5 | 0.5 | √ | 230V redundancy power supply, a sensor and an executing mechanism adopt a redundancy mode for connection |
| Whether maintenance of all printed circuit boards and the like need to be executed beyond a quality maintenance center workshop and whether all repair projects pass a pre-assembly test? | 0.5 | 1.0 | √ | Each module leaves the factory after going through complete inspection, and a whole system is assembled on site after full commissioning |
| Whether the system is in a low diagnosis coverage ratio (60% or 90%)? Whether to provide a failure report for a field replaceable module layer? | 0.5 | | √ | DC is in a range from 60% to 90% |
| **Capability/training/safety literacy** | **2.5** | **7.5** | | |
| Whether a designer is trained (using a training document) so as to understand a cause and a consequence of the common cause failure | 2.0 | 3.0 | √ | The designer is trained |
| Whether a maintainer is trained (using a training document) so as to understand a cause and a consequence of the common cause failure | 0.5 | 4.5 | √ | The designer is trained |
| **Environment control** | **2.5** | **3.5** | | |
| Whether there is a limit to personnel in and out (such as a locked cabinet and inaccessible position)? | 0.5 | 2.5 | √ | The cabinet is locked, the CPU working mode switch is locked, and manual inputting on an auxiliary console is locked |
| Whether signals and power cables are spaced apart in all positions | 2.0 | 1.0 | √ | Strong electricity adopts an independent cable trench during wiring of the cabinet |
| **Environment test** | **10** | **10** | | |
| Whether anti-interference performance of the system against influence of all related environments (such as EMC, temperature, vibration, impact and humidity) reaches level regulated in a recognized standard? | 10 | 10 | √ | Perform EMC test independently |

Related parameters of the present application are calculated in the following table according to the above scores of the test items.

| | | |
|---|---|---|
| (X, Y) | 42.5 | 28.5 |
| (Z) | 99.0 | |
| S = X+Y | 71 | |
| β | 0.01 | |
| S_{D} =X(Z+1) +Y | 159.5 | |
| β_{D} | 0.01 | |

As a contrast, in a comparative embodiment provided in the present application, a redundant channel structure adopts the same hardware design, and statistics of a contribution of a diagnosis test for an electronic element is shown in the following table:

| **Item** | **Logical sub-system** | | **Logical sub-system** | Description on how to meet conditions in a system |
|---|---|---|---|---|
| | **X** | **Y** | | |
| **Separate/space apart** | **7.0** | **3.0** | | |
| Whether wiring of all signal cables in each channel in all positions is spaced apart? | 1.5 | 1.5 | √ | Only diagnosis information is exchanged between two channels |
| Whether printed circuit boards of all channels of the logical sub-system are independent? | 3.0 | 1.0 | √ | IOs is in different racks, and a printed circuit of a CPU bottom board is completely independent |
| Whether channels of the logical sub-system are in own frameworks? | 2.5 | 0.5 | √ | The system adopts an independent machine case, and the machine case has an electromagnetic shielding function |
| **Diversity and redundancy** | **3.0** | **2.0** | | |
| Whether each channel adopts different electronic technologies? For example, an electronic circuit, programmable electronics and another relay are used. | 8.0 | | | |
| Whether each channel adopts different electronic technologies? For example, an electronic circuit or another programmable electronics are used. | 6.0 | | | |
| Whether to use a medium diversity method? For example, a hardware diagnosis test is performed by using different technologies. | 3.0 | 2.0 | √ | |
| **Complexity/design/application/aging/experience** | **2.0** | **1.0** | | |
| Whether a cross connection between channels can exclude the exchange of any information, unless otherwise being used for a diagnosis test or a decision purpose? | 0.5 | 0.5 | √ | |
| Whether an input and an output have overvoltage | 1.5 | 0.5 | √ | Adopt self-recovered |
| and overcurrent protection in a possible level | | | | safety, an operational amplifier and a photoelectric coupler for protection |
| **Regulation/manual interface** | **1.5** | **1.5** | | |
| Whether documented maintenance regulations regulate that all parts (such as cables) in the redundant system are mutually independent without the need for re-positioning? | 0.5 | 0.5 | √ | 230V redundancy power supply, a sensor and an executing mechanism adopt a redundancy mode for connection |
| Whether maintenance of all printed circuit boards and the like need to be executed beyond a quality maintenance center workshop and whether all repair projects pass a pre-assembly test? | 0.5 | 1.0 | √ | Each module leaves the factory after going through complete inspection, and a whole system is assembled on site after full commissioning |
| Whether the system is in a low diagnosis coverage ratio (60% or 90%)? Whether to provide a failure report for a field replaceable module layer? | 0.5 | | √ | DC is in a range from 60% to 90% |
| **Capability/training/safety literacy** | **2.0** | **3.0** | | |
| Whether a designer is trained (using a training document) so as to understand a cause and a consequence of the common cause failure | 2.0 | 3.0 | √ | The designer is trained |
| Whether a maintainer is trained (using a training document) so as to understand a cause and a consequence of the common cause failure | 0.5 | 4.5 | | |
| **Environment control** | **2.5** | **3.5** | | |
| Whether there is a limit to personnel in and out (such as a locked cabinet and inaccessible position)? | 0.5 | 2.5 | √ | The cabinet is locked, the CPU working mode switch is locked, and manual inputting on an auxiliary console is locked |
| Whether signals and power cables are spaced apart in all positions | 2.0 | 1.0 | √ | Strong electricity adopts an independent cable trench during wiring of the cabinet |
| **Environment test** | **10** | **10** | | |
| Whether anti-interference performance of the system against influence of all related environments (such as EMC, temperature, vibration, impact and humidity) reaches level regulated in a recognized standard? | 10 | 10 | √ | Perform EMC test independently |

Related parameters of the comparative embodiment are calculated in the following table according to the above scores of the test items.

| | | |
|---|---|---|
| (X, Y) | 28 | 24 |
| (Z) | 99.0 | |
| S = X+Y | 52 | |
| β | 0.02 | |
| S_{D} =X(Z+1) +Y | 108 | |
| β_{D} | 0.01 | |

It may be known from the above that compared with the comparative embodiment using the homogeneous redundant channel structure design, the coefficient β of the present application is smaller than the comparative embodiment, a total failure rate caused by a risk common cause failure is: λ=λ_{DUP}+λ_{DD}β_{D}, where λ_{DU} is a failure rate of a single channel without detecting a fault, λ_{DD} is a failure rate of a single channel with a detected fault, and thus through calculation, a heterogeneous redundant channel of the present application has a smaller common cause failure rate than the comparative embodiment.

### Embodiment 7

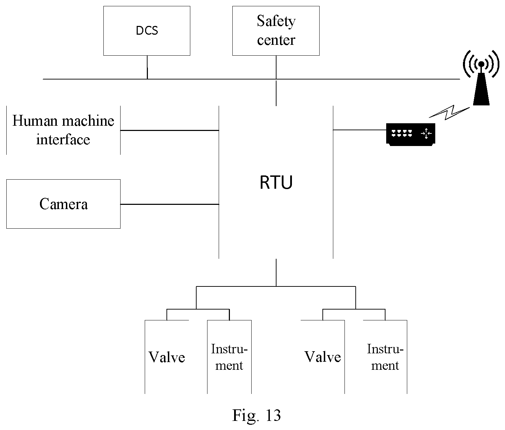

As shown in Fig. 13, based on Embodiment 5, a safety control system is provided and includes: an executing unit; and the remote measuring and controlling terminal described above. The remote measuring and controlling terminal is configured to generate a corresponding executing control signal according to an externally inputted signal and send the executing control signal to the executing unit so as to control the executing unit to execute a corresponding action.

The safety control system may include a plurality of remote measuring and controlling terminals, namely RTU, distributed in one or more regions. The RTU may be used as a device or system for providing localized control and data access at a site far away from another control system such as DCS, for example, the RTU may be located at or nearby an apparatus or storage tank field. The RTU may be connected with another control system through a wired or wireless network, for example, microwave, cellular or another radio frequency communication. The RTU further communicates and interacts with one or more industrial field devices. The field device may include a monitoring unit such as a sensor for measuring one or more characteristics in a process, an executing unit such as an executing mechanism for changing one or more characteristics in a process or another industrial field device. In this embodiment, the RTU communicates with the field device such as a valve and an instrument through wired connection. The wired connection may include a serial connection such as RS458 connection, Ethernet connection, industrial protocol connection or another wired connection.

For example, the RTU may be used as a safety control device of a disproportionation feeding heating furnace in a aromatics complex plant, and a disproportionation feeding flow and a fuel gas manifold pressure value of the heating furnace may be acquired in real time through a flow sensor and a pressure sensor arranged in the heating furnace and transmitted to two processing modules of the RTU through wired or wireless network. When the fuel gas manifold pressure is too low, the RTU cuts off feeding of fuel gas by controlling a field valve, so as to prevent a situation that the fuel gas in the heating furnace is accumulated and explodes when meeting open flame due to flameout of the heating furnace. When the feeding flow of the heating furnace is too low, the RTU controls and cuts off feeding of the fuel gas, so as to prevent a furnace tube from being damaged under dry burning, and thus safety control over the heating furnace is achieved. In order to avoid a safety control failure for the heating furnace, the logical decision module of the RTU performs decision processing on output signals of the two processing modules of the RTU through a preset logical decision structure, so as to guarantee that when one path of output signal shows that a monitored value is too low, a safety control value is outputted, and feeding of the fuel gas is cut off.

The RTU may further be connected with one or more human machine interfaces (HMI), such as a display screen or a console. The HMI may display a running state of the RTU and may also control the RTU through data transmission. A safety camera may capture a still or video image and provide the image to a remote device such as a safety center via the RTU. A radio device may be configured to support wireless communication between the RTU and a remote access point, and the remote access point communicates with another control system via a network.

An SIS of this embodiment may be further provided with an engineer station and an operator station. The engineer station is a PC and can execute writing of a user application program and download the user application program into an SD card, where the SD card is mounted in an SD slot of a module. The operator station communicates with the system through a standard communication protocol to monitor system running conditions and acquire and record input and output states, diagnosis and warning information, and SOE information. For ensuring information safety, communication between the operator and the system is one-way and can read only, not write, and SOE historical data is stored in the operator station.

By verifying a system using the RTU of this embodiment, the diagnosis coverage rate DC of the system of this embodiment is greater than 90%, a safety failure factor (SFF) of the system is greater than 90%, fault response time is shorter than 30 seconds, mean time to repair (MTTR) is shorter than 48 hours, and reliability of the system can be effectively improved.

To sum up, the remote measuring and controlling terminal of the present disclosure has redundant signal processing channels, when any one of the signal processing channels has a fault, another signal processing channel can output an accurate control signal, so that reliability and safety of signal transmission are effectively improved, and a control safety accident caused by a fault of the signal processing channel is avoided. Meanwhile, in the present disclosure, DI, AI and DO interface units including a diagnosis circuit are integrated in the processing module and can be controlled by the controller, when self-checking needs to be performed, a field signal is shielded and a self-checking signal is generated, so switching of the field signal and the self-checking signal is implemented, and it is suitable for being integrated with the controller and meets the demand for miniaturization. Meanwhile, in the present application, by combining the redundant processing modules, the interface units of the processing modules and technical features such as performing logical decision on the control signal outputted by the controller, two-stage safety guarantee for the I/O channel is actually achieved, the first stage is to divide the field signal or the self-checking signal into two paths to be inputted into the two input ends of the controller for fault diagnosis, so the fault diagnosis of the interface module-controller end is achieved; and the second stage is to perform logical decision after performing abnormality judgment on the control signals outputted by the redundant controllers, so it is guaranteed that the accurate control signal is outputted. Meanwhile, in the first-stage safety guarantee, full-coverage diagnosis for the I/O channel fault and positioning of a fault position can be implemented by switching the field signal and the self-checking signal, so that 100% fault self-diagnosis for a digital quantity input channel, an analog quantity input channel and a switch quantity output channel is achieved, and a diagnosis result only gives an alarm and does not directly change a system output result. Meanwhile, the present disclosure can monitor the device performance degradation trend of the digital quantity input channel, the analog quantity input channel and the switch quantity output channel for a long time, the fault prediction is implemented, and advantages of being simple in circuit structure, being reliable and having fewer devices are achieved.

Preferred implementations of the present disclosure are described in detail above with reference to the accompanying drawings, however, the implementations of the present disclosure are not limited to the specific details in the above implementations. Various simple variations may be made for the technical solutions of the implementations of the present disclosure within the scope of the technical concept of the implementations of the present disclosure, and these simple variations fall within the protection scope of the implementations of the present disclosure. It needs to be additionally noted that the various specific technical features described in the above specific implementations may be combined in any suitable mode without contradiction. In order to avoid useless repetitions, various possible combinations are omitted in the implementations of the present disclosure. Those skilled in the art can understand that implementing all or part of steps in the method in the above implementations may be completed by instructing related hardware through a program, the program is stored in a storage medium and includes a plurality of instructions so as to cause a single-chip computer, a chip or a processor to execute all or part of steps in the method in the various implementations of the present disclosure. The above storage medium includes: a U disk, a mobile hard disk drive, a read-only memory (ROM), a random access memory (RAM), a diskette, an optical disc or various media capable of storing a program code.

In addition, various different implementations of the present disclosure may also be combined in any way without violating the concept of the implementations of the present disclosure, which are also regarded as the contents disclosed by the implementations of the present disclosure.

## Claims

1. A remote measuring and controlling terminal, comprising:
an interface module and a processing module; the processing module comprising an I/O channel unit and a controller, the interface module being connected with the I/O channel unit and the controller in sequence, and the I/O channel unit comprising an analog quantity interface unit;
the analog quantity interface unit comprising:
a signal switching unit and a first switch unit;
the controller being connected with the signal switching unit and the first switch unit in sequence, an input end of the first switch unit being connected with the interface module and configured to input a first analog signal inputted externally, and an output end of the first switch unit being configured to send the first analog signal to a first input end and a second input end of the controller; and the signal switching unit being configured to control the first switch unit to switch off in the case that a first control signal outputted by the controller is received so as to cut off a connection between the first analog signal and the controller, generate a second analog signal in the case that a second control signal outputted by the controller is received and send the second analog signal to the first input end and the second input end of the controller.

2. The remote measuring and controlling terminal according to claim 1, wherein the remote measuring and controlling terminal comprises at least two processing modules, and the remote measuring and controlling terminal further comprises:
a logical decision module;
the at least two processing modules are connected with the interface module and the logical decision module respectively;
the at least two processing modules obtain an externally inputted signal respectively through the interface module, generate a corresponding control signal according to the externally inputted signal and send the generated control signal to the logical decision module; and
the logical decision module is further configured to:
use a normal control signal in the control signals generated by the at least two processing modules as an executing control signal in the case that any one of the control signals generated by the at least two processing modules is determined as abnormal;
use any one of the control signals generated by the at least two processing modules as an executing control signal in the case that the control signals generated by the at least two processing modules are determined as normal; and
generate a safety control signal as an executing control signal in the case that the control signals generated by the at least two processing modules are determined as abnormal, so as to control an executing unit to stop running.

3. The remote measuring and controlling terminal according to claim 2, wherein the I/O channel unit further comprises:
a switch quantity interface unit and a digital quantity interface unit.

4. The remote measuring and controlling terminal according to claim 2, wherein the signal switching unit comprises:
a first signal switching sub-unit, a second signal switching sub-unit, a first switch sub-unit, a second switch sub-unit, a switch signal generating sub-unit and a second analog signal generating sub-unit;
an input end of the first signal switching sub-unit is connected with the first output end of the controller and configured to receive the first control signal, an output end of the first signal switching sub-unit is connected with an input end of the first switch sub-unit, and an output end of the first switch sub-unit is connected with the switch signal generating sub-unit and then connected with a control end of the first switch unit;
an input end of the second signal switching sub-unit is connected with a second output end of the controller and configured to receive the second control signal, an output end of the second signal switching sub-unit is connected with an input end of the second switch sub-unit, and an output end of the second switch sub-unit is connected with the second analog signal generating sub-unit and then connected with the first input end and the second input end of the controller; and
both the first switch sub-unit and the second switch sub-unit are opto-couplers.

5. The remote measuring and controlling terminal according to claim 2, wherein the controller is further configured to:
compare the first analog signals received by the first input end and the second input end of the controller with a preset analog quantity signal threshold respectively, and generate a first fault warning signal in the case that the first analog signal received by the first input end or the second input end of the controller is determined as abnormal according to a comparison result; and
compare the second analog signals received by the first input end and the second input end of the controller with the preset analog quantity signal threshold respectively, and generate a second fault warning signal in the case that the second analog signal received by the first input end or the second input end of the controller is determined as abnormal according to a comparison result.

6. The remote measuring and controlling terminal according to claim 5, wherein the controller is further configured to:
in the case that the first analog signal received by the first input end or the second input end of the controller is determined as normal according to a comparison result, generate a corresponding control signal according to a normal first analog signal; and
in the case that both the first analog signals received by the first input end and the second input end of the controller are determined as normal according to the comparison result, generate a corresponding control signal according to any one of normal first analog signals.

7. The remote measuring and controlling terminal according to claim 2, wherein the controller is further configured to:
continuously obtain the first analog signals or the second analog signals received by the first input end and the second input end of the controller within a preset time period, and generate a first curve representing a variation trend of the first analog signal or the second analog signal obtained by the first input end of the controller within the preset time period and a second curve representing a variation trend of the first analog signal or the second analog signal obtained by the second input end of the controller within the preset time period; and
compare the first curve and the second curve with a preset analog quantity signal variation curve, and determine that the first curve or the second curve is abnormal in the case that a deviation between the first curve or the second curve and the preset analog quantity signal variation curve is greater than a curve deviation threshold.

8. The remote measuring and controlling terminal according to claim 3, wherein the switch quantity interface unit comprises:
a switch quantity output unit and a sampling unit;
an output end of the controller is connected with an input end of the switch quantity output unit, an input end of the sampling unit is connected with an output end of the switch quantity output unit, an output end of the sampling unit is connected with an input end of the controller, and the output end of the switch quantity output unit is connected with the executing unit; and
the switch quantity output unit is configured to generate a third control signal corresponding to a current switch quantity signal according to the switch quantity signal sent by the controller, send the third control signal as the control signal to the logical decision module, and generate a fourth control signal corresponding to a self-checking signal according to the self-checking signal sent by the controller, and the sampling unit is configured to feed the third control signal and the fourth control signal back to the controller.

9. The remote measuring and controlling terminal according to claim 8, wherein the switch quantity output unit comprises:
a first switch element and an opto-couplers isolation unit;
a control end of the first switch element is connected with the output end of the controller, an input end of the opto-couplers isolation unit constitutes an isolation control loop through the first switch element, and an output end of the opto-couplers isolation unit is connected with the logical decision module; and
the first switch element controls the isolation control loop to be connected and disconnected according to the switch quantity signal outputted by the controller, so as to control the output end of the opto-couplers isolation unit to generate the third control signal corresponding to the current switch quantity signal.

10. The remote measuring and controlling terminal according to claim 9, wherein the first switch element is a triode, and the switch quantity output unit further comprises:
a first resistor, a second resistor and a first diode;
the output end of the controller is connected with a base electrode of the first switch element through the first resistor, an emitting electrode of the first switch element is grounded, a collector electrode of the first switch element is connected with a second input end of the opto-couplers isolation unit through the second resistor, and a first input end of the opto-couplers isolation unit is connected with a power source;
a first output end of the opto-couplers isolation unit is connected with a negative electrode end of the first diode, a positive electrode end of the first diode is connected with the executing unit through the logical decision module, a second output end of the opto-couplers isolation unit is connected with the executing unit, and the first output end and the second output end of the opto-couplers isolation unit, the logical decision module and the executing unit constitute a control loop of the executing unit; and
the first input end and the second input end of the opto-couplers isolation unit constitute a first isolation control loop through the first switch element, and the first switch element controls the first isolation control loop to be connected and disconnected according to the switch quantity signal outputted by the controller, so as to generate the third control signal corresponding to the current switch quantity signal on the control loop of the executing unit by controlling connection and disconnection between the first output end and the second output end of the opto-couplers isolation unit.

11. The remote measuring and controlling terminal according to claim 9, wherein the sampling unit comprises:
a voltage sampling unit and a third resistor; and
an input end of the voltage sampling unit is connected with the output end of the opto-couplers isolation unit through the third resistor and configured to acquire a voltage signal of the third control signal, and an output end of the voltage sampling unit is connected with the input end of the controller and configured to feed the voltage signal of the third control signal back to the controller.

12. The remote measuring and controlling terminal according to claim 10, wherein the self-checking signal is a narrow pulse signal, and the controller is further configured to generate a corresponding narrow pulse signal according to the current switch quantity signal, comprising:
generating a narrow pulse signal which is in a low level and then in a high level in the case that the current switch quantity signal is a high level signal; and
generating a narrow pulse signal which is in a high level and then in a low level in the case that the current switch quantity signal is a low level signal.

13. The remote measuring and controlling terminal according to claim 8, wherein the controller is further configured to:
match the current switch quantity signal with the third control signal, and generate a first fault warning signal in the case that the current switch quantity signal is not matched with the third control signal; and
match the self-checking signal with the fourth control signal, and generate a second fault warning signal in the case that the self-checking signal is not matched with the fourth control signal.

14. The remote measuring and controlling terminal according to claim 8, wherein the controller is further configured to:
continuously obtain the third control signal or the fourth control signal within the preset time period through the sampling unit and generate a first curve representing a voltage variation trend of the third control signal or generate a second curve representing a voltage variation trend of the fourth control signal; and
compare the first curve or the second curve with a preset voltage variation curve, and determine that the first curve or the second curve is abnormal in the case that a deviation between the first curve or the second curve and the preset voltage variation curve is greater than a curve deviation threshold.

15. The remote measuring and controlling terminal according to claim 3, wherein the digital quantity interface unit comprises:
a second switch unit, a first signal isolation unit and an output judgment unit;
the second switch unit is connected to an input end loop of the first signal isolation unit in series, the controller is connected with the second switch unit and the input end loop of the first signal isolation unit, the output judgment unit is connected to an output end loop of the first signal isolation unit, the output end loop of the first signal isolation unit is connected with the first input end and the second input end of the controller, and the input end loop of the first signal isolation unit is further configured to input an externally inputted digital quantity input signal;
the controller is configured to send a self-checking signal to the input end loop of the first signal isolation unit and send a switch control signal to the second switch unit so as to control the second switch unit to switch on or off, and the input end loop of the first signal isolation unit is connected in the case that the second switch unit is switched on and disconnected in the case that the second switch unit is switched off; and
the output judgment unit is configured to output a high-level judgment signal through the output end loop of the first signal isolation unit in the case that the input end loop of the first signal isolation unit is disconnected, and the output end loop of the first signal isolation unit outputs a low-level judgment signal in the case that the input end loop of the first signal isolation unit is connected and the digital quantity input signal or the self-checking signal is a high level signal.

16. The remote measuring and controlling terminal according to claim 15, wherein the second switch unit comprises:
a second switch element and a fourth resistor; and
a first output end of the controller is connected with a control end of the second switch element through the fourth resistor, and the controller sends a switch control signal through the first output end of the controller.

17. The remote measuring and controlling terminal according to claim 16, wherein the first signal isolation unit comprises:
an opto-coupler unit;
a first input end of the opto-coupler unit is connected with a second output end of the controller and connected with the digital quantity input signal, a second input end of the opto-coupler unit is grounded through the second switch element, and the controller sends the self-checking signal through the second output end of the controller; and
a first output end of the opto-coupler unit is connected with the first input end and the second input end of the controller and the output judgment unit, and a second output end of the opto-coupler unit is grounded.

18. The remote measuring and controlling terminal according to claim 17, wherein the digital quantity interface unit further comprises:
a second signal isolation unit and a fifth resistor;
the second signal isolation unit is connected with the first input end of the opto-coupler unit through the fifth resistor;
the second output end of the controller is connected with the fifth resistor through the second signal isolation unit, and the digital quantity input signal is transmitted to the first input end of the opto-coupler unit through the second signal isolation unit; and
the second signal isolation unit is configured to isolate the digital quantity input signal and the self-checking signal.

19. The remote measuring and controlling terminal according to claim 18, wherein the second signal isolation unit comprises:
a second diode and a third diode;
a negative electrode end of the second diode is connected with the first input end of the opto-coupler unit through the fifth resistor, and a positive electrode end of the second diode is configured to input the digital quantity input signal; and
a negative electrode end of the third diode is connected with the first input end of the opto-coupler unit through the fifth resistor, and a positive electrode end of the third diode is connected with the second output end of the controller.

20. The remote measuring and controlling terminal according to claim 17, wherein the output judgment unit comprises:
a sixth resistor and a seventh resistor;
a first end of the sixth resistor is connected with a power source, and a second end of the sixth resistor is connected with a first end of the seventh resistor and the first output end of the opto-coupler unit and then connected with the first input end and the second input end of the controller; and
a second end of the seventh resistor is grounded.

21. The remote measuring and controlling terminal according to claim 15, wherein the input end loop of the first signal isolation unit receives the externally inputted digital quantity input signal and outputs a first judgment signal corresponding to the digital quantity input signal through the output end loop of the first signal isolation unit to the first input end and the second input end of the controller, and the controller is further configured to:
perform analog-digital conversion on the first judgment signals received by the first input end and the second input end of the controller and then compare the converted first judgment signals with a digital quantity signal threshold respectively, and generate a first fault warning signal in the case that the first judgment signal received by any one input end of the controller is determined as abnormal according to a comparison result; and
send the self-checking signal to the input end loop of the first signal isolation unit during self-checking and output a second judgment signal corresponding to the self-checking signal to the first input end and the second input end of the controller through the output end loop of the first signal isolation unit, perform analog-digital conversion on the second judgment signal received by the first input end and the second input end of the controller and then compare the converted second judgment signals with the digital quantity signal threshold respectively, and generate a second fault warning signal in the case that the second judgment signal received by any one input end of the controller is determined as abnormal according to a comparison result.

22. The remote measuring and controlling terminal according to claim 15, wherein the controller is further configured to:
continuously obtain a judgment signal received by any one input end of the controller within a preset time period and generate a first curve representing a voltage variation trend of the judgment signal obtained by a corresponding input end of the controller within the preset time period; and
determine the first curve as abnormal in the case that a deviation between the first curve and the standard voltage variation curve is greater than a curve deviation threshold.

23. The remote measuring and controlling terminal according to claim 15, wherein the controller is further configured to:
in the case that the first judgment signal received by the first input end or the second input end of the controller is determined as normal according to a comparison result, generate a corresponding control signal according to a normal first judgment signal; and
in the case that both the first judgment signals received by all the input ends of the controller are determined as normal according to a comparison result, generate a corresponding control signal according to any one of normal first judgment signals.

24. A safety control system, comprising:
an executing unit; and
the remote measuring and controlling terminal according to any one of claims 1-23;
the remote measuring and controlling terminal being configured to generate a corresponding executing control signal according to an externally inputted signal and send the executing control signal to the executing unit so as to control the executing unit to execute a corresponding action.
